(19) Europäisches Patentamt
European Patent Office
Office européen des brevets

(11) **EP 4 742 220 A1**

(12) **EUROPEAN PATENT APPLICATION**
published in accordance with Art. 153(4) EPC

(43) Date of publication:
**13.05.2026 Bulletin 2026/20**

(21) Application number: **24839572.5**

(22) Date of filing: **01.07.2024**

(51) International Patent Classification (IPC):
*G09F 9/00* [(2006.01)]    *B32B 7/023* [(2019.01)]
*B32B 17/06* [(2006.01)]    *C03C 17/245* [(2006.01)]
*C03C 17/42* [(2006.01)]    *G09F 9/30* [(2006.01)]

(52) Cooperative Patent Classification (CPC):
**B32B 7/023; B32B 17/06; C03C 17/245;
C03C 17/42; G09F 9/00; G09F 9/30**

(86) International application number:
**PCT/JP2024/023778**

(87) International publication number:
**WO 2025/013680 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.07.2023 JP 2023112055**

(71) Applicant: **AGC INC.**
**Chiyoda-ku,**
**Tokyo 1008405 (JP)**

(72) Inventor: **FUJIE, Yohei**
**Tokyo 100-8405 (JP)**

(74) Representative: **Müller-Boré & Partner**
**Patentanwälte PartG mbB**
**Friedenheimer Brücke 21**
**80639 München (DE)**

(54) **GLASS LAMINATE, DISPLAY DEVICE, AND METHOD FOR PRODUCING GLASS LAMINATE**

(57) A glass laminate 10 according to the present invention includes: a glass substrate 20 having a first main surface 20A and a second main surface 20B; a colored layer 40 provided on the second main surface 20B side of the glass substrate 20 and containing a pearl pigment; a transmittance adjustment layer 50 provided on the second main surface 20B side of the glass substrate 20; and an anti-reflection layer provided on the first main surface 20A side of the glass substrate 20. The average brightness $L_{ave}{}^*$, which is an average value of the brightness measured on the first main surface 20A, is 22 to 43.

*FIG. 2*

**Description**

TECHNICAL FIELD

The present invention relates to a glass laminate, a display device, and a method for producing a glass laminate.

BACKGROUND ART

As a display device that displays an image, an icon, or the like, a display device that allows a pattern portion to be visually recognized in a state where no image is displayed is known. For example, Patent Literature 1 discloses that a decorative sheet including a pattern portion and a plurality of transmission portions is provided on a display surface of a display device. According to Patent Literature 1, an image is visually recognized through the transmission portions in a state where the image is displayed, and the pattern portion is visually recognized in a state where no image is displayed.

CITATION LIST

PATENT LITERATURE

Patent Literature 1: WO 2020/040195

SUMMARY OF INVENTION

TECHNICAL PROBLEM

In such a display device, it is required to appropriately display an image while improving designability.
An object of the present invention is to provide a glass laminate, a display device, and a method for producing a glass laminate capable of appropriately displaying an image while improving designability.

SOLUTION TO PROBLEM

A glass laminate according to the present disclosure includes: a glass substrate having a first main surface and a second main surface; a colored layer containing a pearl pigment and provided on a second main surface side of the glass substrate; a transmittance adjustment layer provided on the second main surface side of the glass substrate; and an antireflection layer provided on a first main surface side of the glass substrate, in which the glass laminate has an average brightness $L_{ave}^{*}$, which is an average value of brightness $L^{*}$ in an $L^{*}a^{*}b^{*}$ color system measured on the first main surface, of 22 or more and 43 or less.
A glass laminate according to the present disclosure includes: a glass substrate having a first main surface and a second main surface; a colored layer containing a pearl pigment and provided on a second main surface side of the glass substrate; and a transmittance adjustment layer provided on the second main surface side of the glass substrate, in which the glass laminate does not include an antireflection layer, and has an average brightness $L_{ave}^{*}$, which is an average value of brightness $L^{*}$ in an $L^{*}a^{*}b^{*}$ color system measured on the first main surface, of 32 or more and 49 or less.
A display device according to the present disclosure includes: the above glass laminate; and a display panel provided on the second main surface side of the glass laminate.
A method for producing a glass laminate according to the present disclosure is a method for producing the above glass laminate, the method including: preparing a glass substrate having a first main surface and a second main surface; preparing a film provided with a colored layer containing a pearl pigment and a transmittance adjustment layer; and placing the film on a second main surface side of the glass substrate.
A method for producing a glass laminate according to the present disclosure is a method for producing the above glass laminate, the method including: preparing a glass substrate having a first main surface and a second main surface; preparing a transfer sheet in which a colored layer containing a pearl pigment and a transmittance adjustment layer are provided on a transfer substrate; and forming the colored layer containing a pearl pigment and the transmittance adjustment layer on a second main surface side of the glass substrate by placing and transferring the transfer sheet on the second main surface of the glass substrate.

ADVANTAGEOUS EFFECTS OF INVENTION

According to the present invention, an image can be appropriately displayed while improving the designability.

BRIEF DESCRIPTION OF DRAWINGS

FIG. 1 is a schematic diagram showing a display device according to the present embodiment.
FIG. 2 is a schematic cross-sectional view of the display device according to the present embodiment.
FIG. 3A is a schematic diagram showing a state of the display device when no image is displayed on the display panel.
FIG. 3B is a schematic diagram showing a state of the display device when an image is displayed on the display panel.
FIG. 4 is a schematic diagram showing another example of a colored layer.
FIG. 5 is a schematic cross-sectional view showing a procedure of forming the colored layer by transfer decoration.
FIG. 6 is a schematic cross-sectional view showing the procedure of forming the colored layer by transfer decoration.

DESCRIPTION OF EMBODIMENTS

Hereinafter, preferred embodiments of the present invention are described in detail with reference to the accompanying drawings. Note that, the present invention is not limited to the embodiment and, in the case where there are a plurality of embodiments, also includes a combination of the embodiments. In addition, numerical values include rounding ranges.

<First Embodiment>

<Display Device>

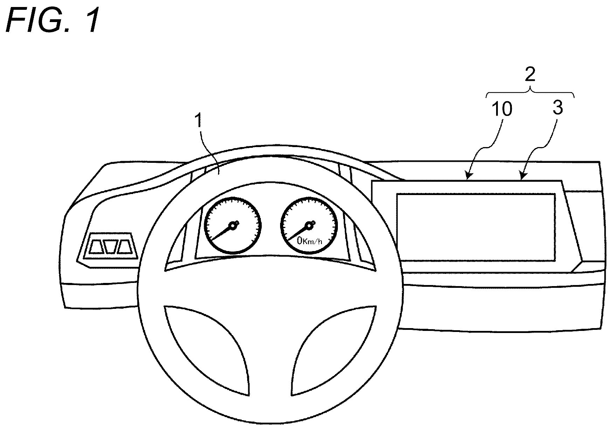

FIG. 1 is a schematic diagram showing a display device according to the present embodiment. As shown in FIG. 1, a display device 2 according to a first embodiment is a display device provided in a vehicle, and is, for example, provided in a front side of a steering shaft 1 in the vehicle. The display device 2 includes a display panel 3 and a glass laminate 10. The glass laminate 10 is used as a cover material for a surface (display surface) of the display panel 3. However, the configuration in FIG. 1 is an example, and the display device 2 to which the glass laminate 10 is applied may have any configuration. In addition, the glass laminate 10 is not limited to being used as a cover material on the surface of the display device for the vehicle, but may be used for any application, such as a cover material of a display device of a smartphone or the like.
FIG. 1 is a schematic diagram when an image is displayed on the display device 2. When no image is displayed, a predetermined design is visually recognized by a colored layer 40 to be described later, and thus the display device 2 may not be visually recognized.

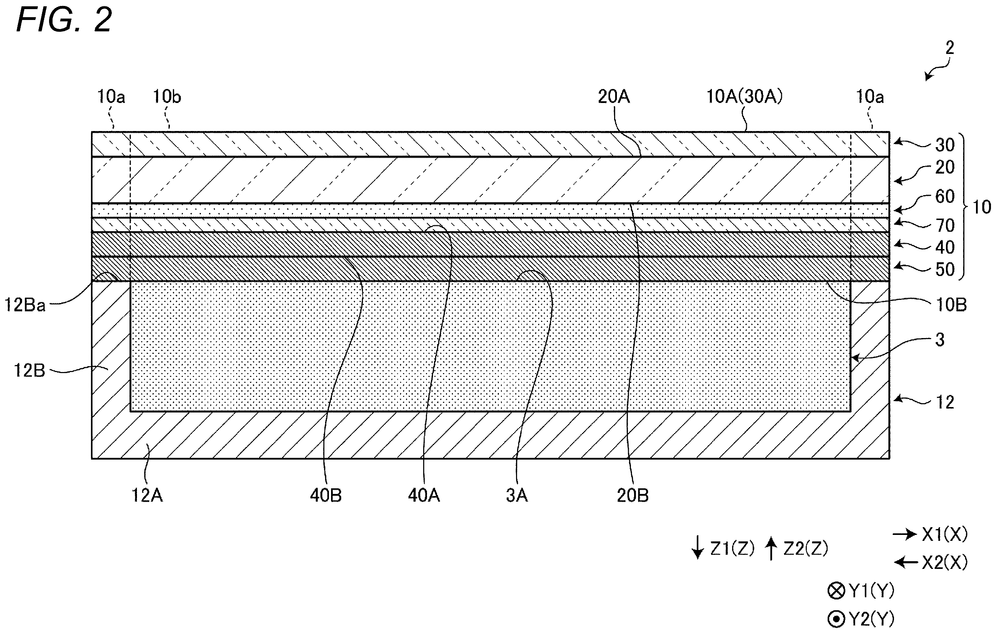

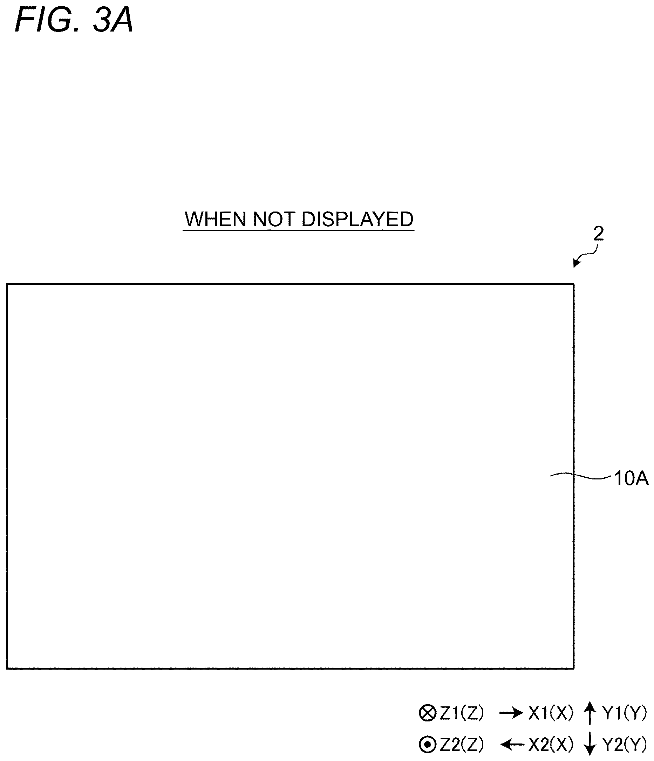

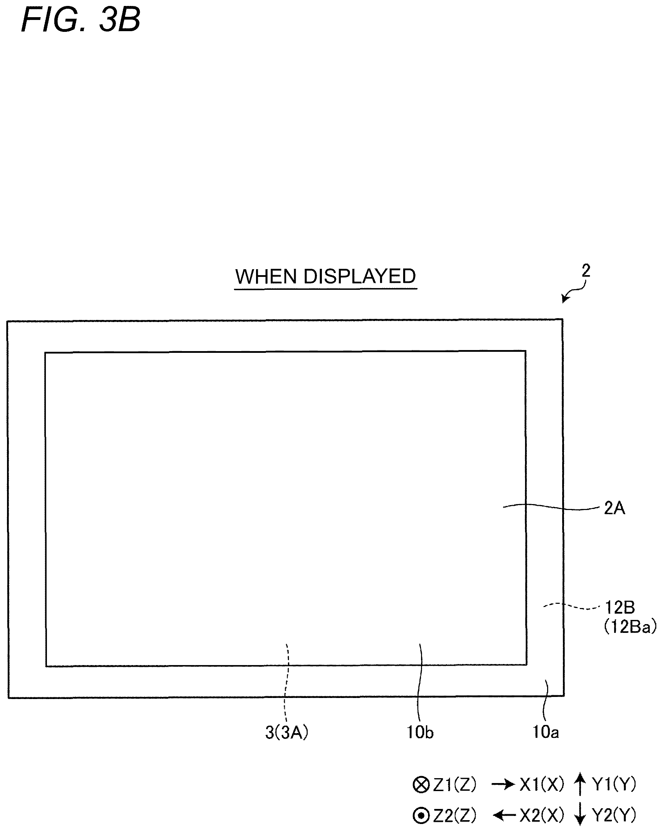

FIG. 2 is a schematic cross-sectional view of the display device according to the present embodiment. FIG. 3A is a schematic diagram showing a state of the display device when no image is displayed on the display panel, and FIG. 3B is a schematic diagram showing a state of the display device when an image is displayed on the display panel.
As shown in FIG. 2, the display device 2 according to the present embodiment is a display device in which the display panel 3 and the glass laminate 10 are laminated. In the present embodiment, the display device 2 includes a casing 12.
Hereinafter, a direction in which the display panel 3 and the glass laminate 10 are laminated is referred to as a Z direction. A direction orthogonal to the Z direction (a left-right direction in the example in FIG. 2) is referred to as an X direction, and a direction orthogonal to the Z direction and the X direction (direction perpendicular to the paper surface in the example in FIG. 2) is referred to as a Y direction. One direction along the X direction (right direction in the example in FIG. 1) is defined as a direction X1, and the other direction along the X direction (left direction in the example in FIG. 1) is defined as a direction X2. One direction along the Y direction (direction toward the back of the paper in the example in FIG. 1) is defined as a direction Y1, and the other direction along the Y direction (direction toward the front of the paper in the example in FIG. 1) is defined as a direction Y2. One direction along the Z direction (direction from the glass laminate 10 toward the display panel 3) is defined as a direction Z1, and the other direction along the Z direction (direction from the display panel 3 toward the glass laminate 10) is defined as a direction Z2.

<Configuration of Each Portion in Display Device>

(Display Panel)

The display panel 3 is a display that displays an image, and is a device that emits light for an image toward the glass laminate 10. Examples of the display panel 3 include a liquid crystal display panel and an organic electro luminescence (EL) panel. Since the display panel 3 emits light from a surface on a direction Z2 side, the surface of the display panel 3 on the direction Z2 side is appropriately described as a display surface 3A that displays an image.

(Casing)

The casing 12 is a housing that houses the display panel 3. The casing 12 includes a bottom surface portion 12A and a wall portion 12B protruding from a peripheral edge of the bottom surface portion 12A in the direction Z2. The display panel 3 is housed in a space surrounded by a surface of the bottom surface portion 12A on the direction Z2 side and an inner peripheral surface of the wall portion 12B.

(Glass Laminate)

The glass laminate 10 is provided on the display surface 3A of the display panel 3 and covers the display surface 3A. In the glass laminate 10, a main surface 10B on a direction Z1 side is in contact with an end portion 12Ba (end surface) of the wall portion 12B on the direction Z2 side, and covers the space of the casing 12 in which the display panel 3 is housed.

Hereinafter, in a main surface of the glass laminate 10 (a main surface 10A on the direction Z2 side in this example), a region in which an image from the display panel 3 is not displayed is referred to as a region 10a, and a region in which an image from the display panel 3 is displayed is referred to as a region 10b. The region 10a is a region not overlapping the display panel 3 (display surface 3A) in the Z direction, and the region 10b is a region overlapping the display panel 3 (display surface 3A) in the Z direction. In the example of the present embodiment, when viewed from the direction Z2, the region 10a is a frame-shaped region formed at a peripheral edge of the main surface of the glass laminate 10, and the region 10b is a rectangular region surrounded by the region 10a. However, the positions and shapes of the regions 10a and 10b are not limited thereto, and may be optional.

In the example in FIG. 2 and FIG. 3B to be described later, the region 10a overlaps the wall portion 12B (end portion 12Ba) in the Z direction, and the region 10b does not overlap the wall portion 12B (end portion 12Ba) in the Z direction.

A positional relationship between the glass laminate 10 and the casing 12 is not limited thereto. For example, a step portion protruding inward may be formed on the inner peripheral surface of the wall portion 12B of the casing 12, the glass laminate 10 may be disposed on the step portion, and a periphery of the glass laminate 10 may be surrounded by the inner peripheral surface of the wall portion 12B. In this case, in the glass laminate 10, the region 10a overlaps the step portion, and the region 10b overlaps the display surface 3A of the display panel 3.

<Layer Configuration of Glass Laminate>

As shown in FIG. 2, the glass laminate 10 includes a glass substrate 20, a functional layer 30, the colored layer 40, a transmittance adjustment layer 50, an adhesive layer 60, and a film 70. In the example in FIG. 2, in the glass laminate 10, the transmittance adjustment layer 50, the colored layer 40, the film 70, the adhesive layer 60, the glass substrate 20, and the functional layer 30 are laminated in this order in the direction Z2. In the example of the present embodiment, since the functional layer 30 is the outermost layer of the glass laminate 10 on the direction Z2 side, a surface of the functional layer 30 on the direction Z2 side constitutes the main surface 10A of the glass laminate 10 on the direction Z2 side. In the present embodiment, the main surface 10A of the glass laminate 10 is a surface exposed to the outside.

The functional layer 30 and the adhesive layer 60 are not essential components.

(Glass Substrate)

The glass substrate 20 is a glass-made member having a first main surface 20A on the direction Z2 side and a second main surface 20B on the direction Z1 side.

The glass substrate 20 has a flat shape in the example in FIG. 2, but is not limited thereto. For example, the glass substrate 20 may be curved, or may have a shape including a complicated three-dimensional curved surface shape having one or more curved portions or bent portions. A method of curving the glass substrate 20 may be any method, and for example, the glass substrate 20 having a flat plate shape may be subjected to heat molding to curve the glass substrate 20. In the case where the glass substrate 20 is curved, a radius of curvature is preferably 50 mm or more, more preferably 100 mm or more, and still more preferably 200 mm or more. The radius of curvature is, for example, 10,000 mm or less, preferably 5,000 mm or less, and more preferably 3,000 mm or less.

The glass substrate 20 has a thickness of preferably 0.3 mm or more and 5.0 mm or less, more preferably 0.8 mm or more and 3.0 mm or less, and still more preferably 1.0 mm or more and 2.5 mm or less. When the thickness is within this range, both weight reduction and a strength of the glass substrate 20 can be achieved, and a cover material of a display device having improved designability can be formed. The thickness of the glass substrate 20 refers to a distance in a normal direction between the first main surface 20A and the second main surface 20B.

The glass substrate 20 is a transparent glass (capable of transmitting visible light). The glass substrate 20 may be formed of a general glass. As the glass substrate 20, for example, an alkali-free glass, a soda lime glass, a soda lime silicate glass, an aluminosilicate glass, a borosilicate glass, a lithium aluminosilicate glass, and a borosilicate glass can be used. In the case of being used in the glass laminate 10, the glass substrate 20 is preferably an aluminosilicate glass or a lithium aluminosilicate glass to which a large stress is easily introduced by a strengthening treatment to obtain a high strength even when the thickness is small. The glass substrate 20 is, for example, preferably strengthened by a chemical strengthening treatment. This kind of chemical strengthening treatment is usually performed by immersing the glass substrate 20 formed into a predetermined shape in a molten salt containing an alkali metal.

(Functional Layer)

The functional layer 30 is provided on the first main surface 20A of the glass substrate 20. The functional layer 30 includes any one or more selected from an antiglare layer, an antireflection layer, and an antifouling layer. In the case where the functional layer 30 includes two or more selected from the antiglare layer, the antireflection layer, and the antifouling layer, the layers are preferably laminated in the Z direction. In this case, the lamination order of the layers in the Z direction may be set freely, and in the case where the antiglare layer, the antireflection layer, and the antifouling layer are included, the antiglare layer, the antireflection layer, and the antifouling layer are preferably laminated in this order in the Z2 direction.
The antiglare layer is a layer that imparts antiglare properties to the glass laminate 10. The antiglare layer may be a layer having an uneven shape. The uneven shape may be directly formed on the first main surface 20A of the glass substrate 20, or may be formed from a layer made of a material different from that of the glass substrate 20. The uneven shape has a surface roughness (root mean square roughness, RMS) of preferably 10 nm to 1,000 nm, and more preferably 10 nm to 500 nm. The antiglare layer may be implemented by an uneven shape provided by subjecting the first main surface 20A of the glass substrate 20 to an antiglare treatment and an etching treatment. A coating film in which particles having any refractive index are dispersed may be used on the first main surface 20A of the glass substrate 20, or an uneven shape may be formed on a main surface of a transparent resin film to be stuck, to implement the uneven shape.
The antireflection layer is a layer that prevents reflection of light. The antireflection layer brings about an effect of reducing a reflectance of the glass laminate 10, reduces glare caused by reflection of light, and, in the case of being used in a display device, improves visibility of the display device. Although the configuration of the antireflection layer is not particularly limited as long as reflection of light can be prevented, for example, a high refractive index layer having a refractive index of 1.9 or more at a wavelength of 550 nm and a low refractive index layer having a refractive index of 1.6 or less at a wavelength of 550 nm may be alternately laminated.
The antifouling layer is a layer having a function of making stains less noticeable, and prevents adhesion of various stains such as fingerprint marks, sweat, and dust. From the viewpoint of properties of the antifouling layer, the antifouling layer is preferably formed on the outermost surface of the glass laminate 10 on the direction Z2 side. For example, the antifouling layer is made of a fluorine-containing organic compound (a compound having a fluorine-containing organic group) capable of imparting antifouling properties, water repellency, and oil repellency. Examples of the fluorine-containing organic compound include a fluorine-containing organosilicon compound.

(Antireflection Layer)

A preferred configuration of the antireflection layer in the case where the functional layer 30 of the glass laminate 10 includes the antireflection layer is described below.
The antireflection layer is made of, for example, a metal oxide. The antireflection layer may have any configuration as long as it can prevent reflection of light. For example, it is possible to have a configuration in which a high refractive index layer having a refractive index of 1.9 or more at a wavelength of 550 nm and a low refractive index layer having a refractive index of 1.6 or less at a wavelength of 550 nm are alternately laminated. The number of the low refractive index layer and the high refractive index layer is not particularly limited, and is, for example, 1 or more and 30 or less. The number of the low refractive index layers is preferably 1 or more and 6 or less, and the number of the high refractive index layers is preferably the same as the number of the low refractive index layers.
In the case where the antireflection layer is composed of a plurality of low refractive index layers and a plurality of high refractive index layers, for example, composed of 6 layers in total, when the layer farthest from the glass substrate 20 is the outermost layer and the number of the layers is counted from the outermost layer, as the first layer, to a glass substrate side, odd-numbered layers including the outermost layer, that is, the outermost layer, the third layer, and the fifth layer, are low refractive index layers. When the layer closer to the glass substrate side than the outermost layer is the second layer, even-numbered layers including the second layer, that is, the second layer, the fourth layer, and the sixth layer, are high refractive index layers. The sixth layer, which is the high refractive index layer farthest from the outermost layer, is in contact with the glass substrate 20 (or a layer in the functional layer 30 on the direction Z1 side with respect to the antireflection layer).

In the case of being composed of one low refractive index layer and one high refractive index layer, the low refractive index layer is the outermost layer and the high refractive index layer is the second layer.

The low refractive index layer is made of a material containing silicon, for example. For example, it may be silicon oxide, aluminum-doped silicon oxide in which silicon oxide is doped with aluminum, or a material in which tin or zirconia is added to silicon oxide.

A main component of the high refractive index layer constituting the second layer is preferably one or more selected from, for example, silicon nitride, titanium oxide, niobium oxide, tantalum oxide, and zirconium oxide. Further, among these materials, from the viewpoint of productivity and the refractive index, silicon nitride, niobium oxide, and tantalum oxide are more preferred, and niobium oxide is most preferred.

Main components of the even-numbered layers of the fourth layer and thereafter, for example, main components of the fourth layer and the sixth layer, may be a material same as that of the second layer, or a material different from that of the second layer. In the case where the main component constituting the second layer is niobium oxide, the even-numbered layers of the fourth layer and thereafter may be made of niobium oxide same as the second layer, or may be made of a different material from that of the second layer.

In the antireflection layer, the total number of the high refractive index layer and the total number of the low refractive index layer may be different from each other, and in the case where the total numbers are different from each other, for example, the outermost layer and the layer in contact with a glass are preferably low refractive index layers, and the main component of the low refractive index layer in contact with the glass substrate 20 (or a layer of the functional layer 30 on the direction Z1 side with respect to the antireflection layer) is preferably silicon oxide.

(Colored Layer)

The colored layer 40 is provided on a second main surface 20B side (direction Z1 side) of the glass substrate 20. In the example in FIG. 2, the colored layer 40 is provided on a glass substrate 20 side (direction Z2 side) with respect to the transmittance adjustment layer 50, and adheres to the second main surface 20B of the glass substrate 20 via the adhesive layer 60.

However, the colored layer 40 may be provided at any position on the second main surface 20B side of the glass substrate 20. As shown in FIG. 2, the colored layer 40 is preferably provided on the glass substrate 20 side (direction Z2 side) with respect to the transmittance adjustment layer 50, but for example, the colored layer 40 may be provided on a side (direction Z1 side) opposite to the glass substrate 20 with respect to the transmittance adjustment layer 50. That is, in this case, the colored layer 40, the transmittance adjustment layer 50, the adhesive layer 60, and the glass substrate 20 are laminated in this order in the direction Z2.

As described above, the adhesive layer 60 is not an essential component. In the case where the adhesive layer 60 is not provided and the colored layer 40 is on the direction Z2 side with respect to the transmittance adjustment layer 50, the colored layer 40 may be in direct contact with the second main surface 20B of the glass substrate 20. In the case where the adhesive layer 60 is not provided and the transmittance adjustment layer 50 is on the direction Z2 side with respect to the colored layer 40, the transmittance adjustment layer 50 may be in direct contact with the second main surface 20B of the glass substrate 20.

The colored layer 40 is a layer containing a pearl pigment. When the colored layer 40 contains a pearl pigment, the colored layer 40 causes a part of incident light to interfere with each other, converts the light into light in a predetermined wavelength band (interference light), and reflects at least a part of the interference light. Therefore, a part of light (for example, external light) incident on the glass laminate 10 from the direction Z1 side is converted into interference light and reflected on a surface 40A of the colored layer 40 on the direction Z2 side. When the colored layer 40 contains a pearl pigment, the colored layer 40 transmits a part of incident light. Therefore, a part of light (for example, light from the display panel 3) incident on the glass laminate 10 from the direction Z2 side is transmitted through the colored layer 40 and emitted from the main surface 10A of the glass laminate 10.

The pearl pigment contained in the colored layer 40 may have any configuration as long as the above functions can be imparted to the colored layer 40, and may include, for example, a core member and a film member covering the core member.

The core member is a member transparent to visible light. As the core member, a chip of natural mica, synthetic mica, silica, alumina, a glass, and a polysilicate can be adopted. As the polysilicate (for example, a flaky inorganic powder made of a layered polysilicate), a flaky piece of a layered polysilicate such as makatite ($Na_2Si_4O_9 \cdot 5H_2O$), ilarite ($Na_2Si_8O_{17} \cdot 10H_2O$), magadiite ($Na_2Si_{14}O_{29} \cdot 10H_2O$), or kenyaite ($Na_2Si_{20}O_{41} \cdot 10H_2O$) can be used.

The film member may be, for example, a metal oxide film having a higher refractive index with respect to visible light than the core member. The film member is set to have an optical film thickness corresponding to the wavelength of the interference light desired to be implemented in the colored layer 40. As the film member, titanium oxide ($TiO_2$), zirconium oxide ($ZrO_2$), zinc oxide (ZnO), iron oxide ($Fe_2O_3$), tin oxide ($SnO_2$), or the like can be adopted, and in particular, the core member is preferably covered with titanium oxide having a refractive index n = 2.3 to 2.7 or iron oxide having a refractive index n = 3.01.

The colored layer 40 may contain a binder in addition to the pearl pigment. The binder may be appropriately selected according to the film, and for example, a transparent ink binder for vinyl-based screen printing can be used.

The colored layer 40 may be designed according to a color and a pattern desired to be visually recognized on the main surface 10A. For example, by designing the colored layer 40, a design (no pattern) having a uniform color can be visually recognized over the entire main surface 10A, or a design (pattern) having a different color can be visually recognized depending on a position on the main surface 10A. Examples of the pattern include a wood grain pattern and a marble pattern. That is, for example, the materials of the core member and the film member and the properties of the pearl pigment such as the optical film thickness of the film member may be adjusted according to the color and the pattern desired to be visually recognized on the main surface 10A.

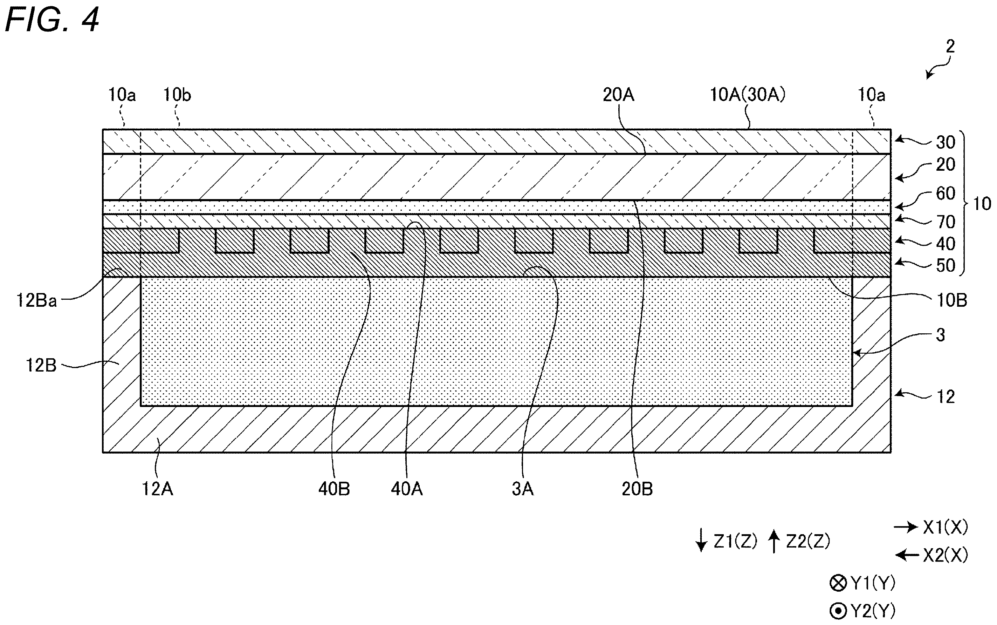

FIG. 4 is a schematic diagram showing another example of the colored layer. In the example in FIG. 2, the colored layer 40 is provided to overlap the entire main surface of the glass laminate 10 (main surface of the glass substrate 20), but is not limited thereto. As shown in the example in FIG. 4, the colored layer 40 may be provided only on a part of the main surface of the glass laminate 10 (the main surface of the glass substrate 20), for example, only at a position where a pattern is desired to be provided. In this case, the reflected interference light is visually recognized in a region overlapping the colored layer 40 in the entire main surface 10A, and the reflected light that is not the interference light is visually recognized in a region not overlapping the colored layer 40. A plurality of colored layers may be laminated according to the color and the pattern desired to be visually recognized.

As shown in the example in FIG. 4, a portion where the colored layer 40 is not provided may be filled with the transmittance adjustment layer 50, or may be filled with the adhesive layer 60 in the case where the film 70 is not provided.

The colored layer 40 has a total thickness of preferably 1 $\mu$m or more and 50 $\mu$m or less, more preferably 3 $\mu$m or more and 30 $\mu$m or less, and still more preferably 5 $\mu$m or more and 15 $\mu$m or less. When the thickness is within this range, it is possible to appropriately transmit light from the display panel 3 while appropriately reflecting external light as interference light. The total thickness of the colored layer 40 refers to, in the case where a plurality of layers are laminated in the Z direction, a total thickness of the layers, and refers to, in the case where there is one colored layer 40, the thickness of the layer.

A transmittance of the colored layer 40 with respect to light having a wavelength of 550 nm is preferably 30% or more and 95% or less, more preferably 50% or more and 95% or less, and still more preferably 60% or more and 95% or less. When the transmittance of the colored layer 40 is within this range, light from the display panel 3 can be appropriately transmitted. The transmittance of the colored layer 40 can be set to a preferred range by adjusting the properties of the pearl pigment and the film thickness. The transmittance is measured according to JIS Z 8701 (1999). As a transmittance meter, for example, a planar substrate transmittance measuring unit LV-RTM manufactured by Lambda Vision Inc. can be used.

By providing such a colored layer 40, the desired color and pattern are visually recognized on the main surface 10A of the glass laminate 10 when no image from the display panel 3 is displayed (when the display panel 3 is turned off), and the image of the display panel 3 can be visually recognized on the main surface 10A of the glass laminate 10 when an image from the display panel 3 is displayed (when the display panel 3 is turned on) .

For example, when no image is displayed, light (external light) from the direction Z1 side is incident on the main surface 10A of the glass laminate 10. A part of the incident light is reflected by the colored layer 40 and is visually recognized as an interference color having a certain wavelength. Therefore, as shown in FIG. 3A, in the present embodiment, when no image is displayed, the color and the pattern corresponding to the interference light are visually recognized over the entire main surface 10A of the glass laminate 10.

In addition, for example, when an image is displayed, the colored layer 40 does not inhibit transmission of light from the display panel 3, and the light from the display panel 3 is transmitted through the colored layer 40 and the like and emitted from the main surface 10A of the glass laminate 10. Therefore, as shown in FIG. 3B, when an image is displayed, the image corresponding to the light from the display panel 3 is preferentially visually recognized on the main surface 10A of the glass laminate 10, and the color and the pattern of the colored layer 40 is hardly visually recognized. In the present embodiment, in the entire main surface 10A, the region 10a does not overlap the display surface 3A of the display panel 3, and the region 10b overlaps the display surface 3A of the display panel 3. Therefore, when an image is displayed, an image corresponding to the light from the display panel 3 is visually recognized in the region 10b, and the image corresponding to the light from the display panel 3 is not visually recognized in the region 10a. For example, in the region 10a, the interference light from the colored layer 40 is visually recognized.

(Transmittance Adjustment Layer)

The transmittance adjustment layer 50 is provided on the second main surface 20B side (direction Z1 side) of the glass substrate 20. In the example in FIG. 2, the transmittance adjustment layer 50 is provided on the side (direction Z1 side) opposite to the glass substrate 20 with respect to the colored layer 40, and is in contact with a surface 40B of the colored layer 40.

However, the transmittance adjustment layer 50 may be provided at any position on the second main surface 20B side of the glass substrate 20. For example, as described above, the transmittance adjustment layer 50 may be provided on the glass substrate 20 side (direction Z2 side) with respect to the colored layer 40, and adheres to the second main surface 20B of the glass substrate 20 via the adhesive layer 60.

The transmittance adjustment layer 50 is a layer for adjusting the transmittance of light (visible light) in the glass laminate 10. That is, the transmittance adjustment layer 50 is a layer that transmits only a part of incident light, and makes the intensity of light after passing through the transmittance adjustment layer 50 lower than the intensity of light before passing.

In the present embodiment, the transmittance adjustment layer 50 does not contain a pearl pigment. Therefore, the transmittance adjustment layer 50 does not have a function (function of reflecting desired interference light) same as the colored layer 40. The transmittance adjustment layer 50 may be formed of any material that transmits only a part of incident light, and the transmittance adjustment layer 50 is, for example, a layer printed with an ink obtained by coloring a transparent binder resin with a pigment or a dye having a dimming color. The transmittance adjustment layer 50 is, for example, a layer printed with a black ink. Alternatively, the transmittance adjustment layer 50 is, for example, a metal thin film layer in which a metal is formed to transmit light. Such a metal thin film layer is formed by, for example, depositing a metal.

The transmittance adjustment layer 50 is preferably provided to overlap the entire main surface of the glass laminate 10 (main surface of the glass substrate 20). Accordingly, the transmittance of light can be adjusted in the entire region of the glass laminate 10.

The transmittance adjustment layer 50 has a thickness of preferably 1 $\mu$m or more and 50 $\mu$m or less, more preferably 1 $\mu$m or more and 20 $\mu$m or less, and still more preferably 3 $\mu$m or more and 10 $\mu$m or less. When the thickness is within this range, the transmittance of light can be appropriately adjusted.

A transmittance of the transmittance adjustment layer 50 with respect to light having a wavelength of 550 nm is preferably 10% or more and 90% or less, more preferably 40% or more and 90% or less, and still more preferably 40% or more and 80% or less. The transmittance of the transmittance adjustment layer 50 can be set to a preferred range by adjusting the material, the thickness, and the like of the transmittance adjustment layer 50. When the transmittance of the transmittance adjustment layer 50 is within this range, light from the display panel 3 can be appropriately transmitted.

(Adhesive Layer and Film)

The adhesive layer 60 is provided between the colored layer 40 or the transmittance adjustment layer 50 (a layer of the colored layer 40 or the transmittance adjustment layer 50 that is on the glass substrate 20 side) and the glass substrate 20, and adheres these layers to each other.

In FIG. 2, the adhesive layer 60 is not in direct contact with the colored layer 40 or the transmittance adjustment layer 50, and the film 70 that transmits visible light is provided between the adhesive layer 60 and the colored layer 40 or the transmittance adjustment layer 50. Here, the film 70 may have any configuration and any thickness. The thickness of the film 70 is selected, for example, from a range of 10 $\mu$m to 1,000 $\mu$m. For example, at least one of a light transmitting resin and a light transmitting elastomer is used for the film. The resin film 70 is selected from, for example, a resin film made of a polyester resin, a polyethylene terephthalate (PET) resin, an acrylic resin, a polycarbonate resin, a polybutylene terephthalate (PBT) resin, a triacetyl cellulose resin, a styrene resin, or an ABS resin, a multilayer film of acrylic resin and ABS resin, or a multilayer film made of an acrylic resin and a polycarbonate resin. As the elastomer used for the film 70, for example, a thermoplastic elastomer (TPE) can be used. Examples of the thermoplastic elastomer include amide-based TPE (TPA), ester-based TPE (TPC), olefin-based TPE (TPO), styrene-based TPE (TPS), and urethane-based TPE (TPU). The film 70 may be a film in which a resin film and an elastomer film are laminated.

The film 70 is not an essential component, and the adhesive layer 60 may be in direct contact with the colored layer 40 or the transmittance adjustment layer 50.

The adhesive layer 60 may have any configuration. For example, in a configuration in which the film 70 is not provided, the adhesive layer 60 adheres to the glass substrate 20 by transfer decoration. In the case where the adhesive layer 60 adheres to the glass substrate 20 by transfer decoration, the adhesive layer 60 preferably has a configuration described below.

The adhesive layer 60 is a layer disposed on the second main surface 20B of the glass substrate 20.

It is preferable that no other layer is present between the adhesive layer 60 and the second main surface 20B of the glass substrate 20.

In the present description, the adhesive layer and a pressure sensitive adhesive layer are clearly distinguished from each other in that the adhesive layer is a layer containing a cured product of an adhesive and not having pressure sensitive adhesiveness at normal temperature (10°C to 30°C), whereas the pressure sensitive adhesive layer is a layer containing a pressure sensitive adhesive and having pressure sensitive adhesiveness at normal temperature (10°C to 30°C).

In the present description, the adhesive and the pressure sensitive adhesive are clearly distinguished from each other in that the glass transition temperature (Tg) of the adhesive is 0°C or higher, whereas the glass transition temperature (Tg) of the pressure sensitive adhesive is lower than 0°C.

(Cured Resin)

The adhesive layer 60 preferably contains a cured resin.

The cured resin means a cured product obtained by curing a curable resin.

In the case where the adhesive layer 60 contains a cured resin, when the glass laminate 10 is being produced by a transfer decoration method to be described later, the adhesive layer protruding from the second main surface 20B of the glass substrate 20 is likely to be peeled off together with a transfer base material . As a result, it is easy to produce a cover glass having an excellent property (just edge performance) that outer edges of the adhesive layer 60 and the colored layer 40 are likely to have a shape along a shape of the second main surface 20B of the glass substrate 20.

The cured resin may be a cured product of a curable resin and a curing agent, or may be a cured product (polycondensate) obtained by reacting a curable resin with heat, light, an acid, an alkali, or the like.

The cured resin is preferably a cured product of a curable resin and a curing agent from the viewpoint of more excellent just edge performance.

(Curable Resin)

Examples of the curable resin to be contained in the adhesive layer 60 include an acrylic resin, a polyester resin, an epoxy resin, a urethane resin, a polyamide resin, a phenol resin, and a urea resin. Among them, a resin selected from the group consisting of an acrylic resin, a polyester resin, and an epoxy resin is preferred, and an acrylic resin is more preferred since the colored layer is easily removed by laser trimming to be described later and the glass substrate after removal of the colored layer has an excellent transmitting property (hereinafter, also referred to as an "excellent laser trimming property").

The acrylic resin is a polymer having a unit derived from a (meth)acrylate. The acrylic resin may have a reactive group such as a carboxy group, a hydroxy group, a sulfo group, or an epoxy group.

The acrylic resin may be a compound having one or more (meth)acryloyl groups and having a reactive group such as a carboxy group, a hydroxy group, a sulfo group, or an epoxy group.

The reactive group is preferably a group capable of reacting with an isocyanate group (for example, a carboxy group, a hydroxy group, or an epoxy group).

The polyester resin is a polymer in which a unit derived from a polycarboxylic acid and a unit derived from a polyhydric alcohol are linked by an ester bond. The polyester resin may have a unit other than the above two units (for example, a unit derived from a hydroxycarboxylic acid compound).

Examples of the polycarboxylic acid include an aromatic polycarboxylic acid and an aliphatic polycarboxylic acid. As the polycarboxylic acid, an aromatic polycarboxylic acid is preferably used, and it is more preferable to use both an aromatic polycarboxylic acid and an aliphatic polycarboxylic acid. The carbon number of the polycarboxylic acid is preferably 8 to 15. The number of carboxy groups in the polycarboxylic acid is preferably 2 to 4, and more preferably 2.

The polyhydric alcohol is preferably a polyhydric alcohol having a carbon number of 2 to 10. The number of hydroxy groups in the polyhydric alcohol is preferably 2 to 4, and more preferably 2.

The epoxy resin is a compound having two or more epoxy groups in a molecule. The epoxy resin is preferably an aromatic compound having a glycidyloxy group such as bisphenol A-diglycidylether, and an oligomer thereof.

The curable resin to be used as an adhesive has a weight average molecular weight (Mw) of preferably 10,000 to 80,000, and more preferably 15,000 to 50,000.

The adhesive layer 60 preferably contains a hot melt adhesive or a cured product thereof.

In the present description, the hot melt adhesive means an adhesive made of a resin having a property of softening by heating and solidifying by cooling and having a glass transition temperature (Tg) in a range of 0°C to 100°C. The hot melt adhesive may be a curable resin, or may not be a curable resin.

The adhesive layer 60 more preferably contains a cured product of a hot melt adhesive as a curable resin, and particularly preferably contains a cured product obtained by curing a hot melt adhesive as a curable resin with a curing agent.

Examples of a composition containing the hot melt adhesive include "GM-3TR" (Tg: 33°C, manufactured by JUJO CHEMICAL CO., LTD.) containing a polyester resin and "GV-3 Medium" (Tg: 76°C, manufactured by Seiko advance Ltd.) containing an acrylic resin.

(Curing Agent)

Examples of the curing agent include a thermal curing agent and a photocuring agent.

As the curing agent, an appropriate type can be selected depending on the type of the reactive group in the curable resin. The curing agent may be used alone or in combination of two or more types thereof. The adhesive layer 60 may contain both a thermal curing agent and a photocuring agent.

The thermal curing agent is a curing agent that does not have reactivity with the curable resin at a temperature lower than a predetermined curing temperature, and that changes the molecular structure and exhibits reactivity with the curable resin by being heated to the predetermined curing temperature or higher.

The curing agent is preferably a thermal curing agent.

Examples of the thermal curing agent include an isocyanate compound, an aziridine compound, an epoxy compound, a metal chelate compound, an amine compound, an acid anhydride, an imidazole compound, a phenol compound, a phosphorus compound, a sulfonium salt, an azo compound, and an organic peroxide. Among them, an isocyanate compound, an imidazole compound, or a phenol compound is preferred, an isocyanate compound or an imidazole compound is more preferred, and an isocyanate compound is still more preferred.

Examples of the isocyanate compound include polyisocyanates such as tolylene diisocyanate, xylylene diisocyanate, diphenylmethane diisocyanate, hexamethylene diisocyanate, and isophorone diisocyanate, and adducts, biurets, and nurates of these polyisocyanates.

The thermal curing agent is preferably a block compound in which a predetermined blocking agent is bonded to a functional group having reactivity with a reactive group in the curable resin. Such a block compound is prevented from reacting with the curable resin in an environment lower than the curing temperature.

Examples of the block compound include a blocked isocyanate.

As the blocking agent, a compound that can be bonded to the functional group in the thermal curing agent and that can be dissociated from the functional group by being heated to a predetermined curing temperature or higher can be used. Examples thereof include the following compounds.

· Lactam compounds such as ε-caprolactam and δ-valerolactam.
· Oxime compounds such as acetaldoxime, acetone oxime, methyl ethyl ketoxime, and cyclohexanone oxime.
· Pyrazole compounds such as pyrazole and 3,5-dimethylpyrazole.
· Amine compounds such as diphenylaniline, aniline ethyleneimine, and diisopropylamine.
· Activated methylene compounds such as dimethyl malonate, diethyl malonate, methyl acetoacetate, ethyl acetoacetate, and acetylacetone.
· Phenol compounds such as phenol, cresol, and ethylphenol.
· Alcohol compounds such as propylene glycol monomethyl ether, ethylene glycol, benzyl alcohol, methanol, and ethanol.
· Mercaptan compounds such as butyl mercaptan and dodecyl mercaptan.
· Acid amide compounds such as acetanilide and acetic acid amide.

The curing temperature of the thermal curing agent is preferably 80°C to 200°C, more preferably 90°C to 180°C, and still more preferably 100°C to 160°C, since a curing rate is more excellent.

The curing temperature of the thermal curing agent can be measured by using differential scanning calorimetry (DSC) according to a known method. In the case where a thermal curing agent is commercially available, the curing temperature may be a catalog value.

The photocuring agent is a curing agent that is irradiated with light such as ultraviolet rays to change the molecular structure and exhibit reactivity with the curable resin.

Examples of the photocuring agent include a photoradical generator and a photocation generator (photoacid generator) that generates a Bronsted acid or a Lewis acid by light irradiation. Examples of the photoradical generator include an acetophenone compound, a benzophenone compound, and an acylphosphine compound. Examples of the photocation generator include a sulfonium salt compound and an iodonium salt compound.

A content of the curing agent is appropriately adjusted according to a content of the curable resin and the number of reactive groups, and is preferably 0.5 mass% to 30 mass%, more preferably 0.5 mass% to 20 mass%, and still more preferably 0.5 mass% to 10 mass% with respect to an adhesive film to be described later.

In the case where the content of the curing agent is the above lower limit value or more, the adhesive layer 60 is sufficiently cured, and adhesion of the adhesive layer 60 is more excellent. In the case where the content of the curing agent is the above upper limit value or less, reliability (moisture and heat resistance, boiling resistance, low-temperature resistance, high-temperature resistance, and weather resistance) of the adhesive layer 60 is more excellent.

The cured resin may be used alone or in combination of two or more types thereof.

The adhesive layer 60 preferably contains a cured resin as a main component. Here, "contains as a main component" means that the content of the cured resin is 50 mass% or more with respect to a total amount of the adhesive layer 60. The content of the cured resin may be 100 mass% with respect to the total amount of the adhesive layer 60.

The adhesive layer 60 preferably contains an infrared absorber from the viewpoint of a more excellent laser trimming property to be described later.

The infrared absorber is, for example, a component that absorbs light having a wavelength of 1064 nm. In the case where a layer in the colored layer 40 in contact with the adhesive layer 60 is black, examples of the infrared absorber include inorganic particles such as carbon black and titanium black, and organic dyes such as phthalocyanine, and among these, carbon black is preferred.

In the case where the layer in the colored layer 40 in contact with the adhesive layer 60 is a layer other than black, for example, a layer having a pattern, the infrared absorber contained in the adhesive layer 60 is preferably a component that absorbs light having a wavelength of 1064 nm and that has a high light transmittance in a visible light region. Examples of such an infrared absorber include tin-doped indium oxide (ITO), antimony-doped tin oxide (ATO), and cesium tungsten oxide (CWO (registered trademark)), and among these, cesium tungsten oxide (CWO) is preferred.

In the case where the adhesive layer 60 contains an infrared absorber, a content thereof with respect to the adhesive layer 60 is, for example, 0.1 mass% or more and less than 10 mass%, and preferably 1 mass% to 8 mass%.

In the case where the adhesive layer 60 contains a component same as the coloring agent such as carbon black, a content thereof is less than 10 mass%, which is distinguished from the colored layer.

The adhesive layer 60 may contain components other than the cured product of the adhesive as long as the effects of the present invention are not impaired. Examples of the other components include additives such as a component B to be described later, a tackifier, an antifoaming agent, a plasticizer, a non-volatile component, a release agent, an adhesion assisting agent, an antioxidant, and a dispersant.

The adhesive layer 60 may contain at least one component B selected from the group consisting of methyl ethyl ketoxime, diethyl malonate, epsilon-caprolactam, 3,5-dimethylpyrazole, and acetoxime, and preferably contains the component B.

A content of the component B is preferably 0.5 mass% to 30 mass% and more preferably 2 mass% to 25 mass% with respect to the adhesive layer 60.

The adhesive layer 60 has a thickness of preferably 30 $\mu$m or less, more preferably 20 $\mu$m or less, still more preferably 10 $\mu$m or less, and particularly preferably 7 $\mu$m or less. The thickness of the adhesive layer 60 is preferably 1 $\mu$m or more, more preferably 3 $\mu$m or more, and still more preferably 4 $\mu$m or more.

The thickness of the adhesive layer 60 can be measured using a non-contact measurement device based on a stage scanning laser probe method (for example, "NH-3MAs" manufactured by MITAKA KOHKI Co., Ltd.). The thickness of the adhesive layer 60 can also be measured by observing a cut surface of each layer in a thickness direction using a scanning electron microscope (SEM). The same applies to the thickness of other layers.

The adhesive layer 60 has a transmission haze of preferably 10% or less, and more preferably 5% or less, from the viewpoint that the appearance of the colored layer 40 visually recognized through the glass substrate 20 and the adhesive layer 60 is more excellent during observation of the glass laminate 10. The transmission haze of the adhesive layer 60 is usually 0.1% or more.

The transmission haze of the adhesive layer 60 can be measured using a haze meter in accordance with the method defined in JIS K7136.

The transmission haze of the adhesive layer 60 can be adjusted by selecting the types and contents of the curable resin contained in the adhesive layer 60 and components of additives such as silica gel, a plasticizer, an adhesion assisting agent, an antioxidant, and a dispersant.

The adhesive layer 60 has a transmittance of preferably 20% or less and more preferably 10% or less at a wavelength of 1064 nm, from the viewpoint of a more excellent laser trimming property to be described later. The transmittance of the adhesive layer 60 at a wavelength of 1064 nm is usually more than 0%.

The transmittance of the adhesive layer 60 at a wavelength of 1064 nm can be measured using an ultraviolet-visible near-infrared spectrophotometer (for example, "SolidSpec-3700DUV" manufactured by Shimadzu Corporation).

The transmittance of the adhesive layer 60 at a wavelength of 1064 nm can be adjusted by selecting the type and content of the infrared absorber contained in the adhesive layer.

The adhesive layer 60 may be replaced with a pressure sensitive adhesive layer (not shown). At this time, the pressure sensitive adhesive layer is provided between the colored layer 40 or the transmittance adjustment layer 50 (a layer of the colored layer 40 or the transmittance adjustment layer 50 that is on the glass substrate 20 side) and the glass substrate 20, and pressure-sensitively adheres these layers to each other.

The pressure sensitive adhesive layer preferably contains an acrylic resin or a silicone-based resin in terms of pressure sensitive adhesiveness and reliability. Further, the pressure sensitive adhesive layer is preferably a compression-bonding type optically-clear pressure sensitive adhesive sheet (OCA) since the transmittance of the pressure sensitive adhesive layer can be increased and the transmission haze thereof can be reduced.

<Method for Producing Glass Laminate>

Next, a method for producing the glass laminate 10 described above is described. The present production method includes: preparing the glass substrate 20; forming the colored layer 40 containing a pearl pigment on the second main surface 20B side of the glass substrate 20; and forming the transmittance adjustment layer 50 on the second main surface 20B side of the glass substrate 20.

In the case of curving the glass substrate 20, the glass substrate 20 may be subjected to heat molding to be curved.

The colored layer 40 and the transmittance adjustment layer 50 may be formed by any method, and may be formed by screen printing, may be formed by sticking a layer already formed on the film 70 together with the film 70 by roll sticking under the atmospheric pressure or vacuum sticking using a vacuum sticking apparatus, or may be formed by a transfer decoration method.

In the case of forming the functional layer 30, the present production method also includes a step of forming the functional layer 30 on the first main surface 20A side of the glass substrate 20.

Hereinafter, an example of a more detailed production method is described.

In this example, the glass substrate 20 is prepared. In this case, the glass substrate 20 may be bent into a predetermined shape (three-dimensional shape) in advance and then subjected to a chemical strengthening treatment. The functional layer 30 may be formed on the first main surface 20A of the glass substrate 20. In the functional layer 30, an antireflection layer and an antifouling layer may be formed after forming at least one of the colored layer 40 and the transmittance adjustment layer 50 to be described later.

Next, in the prepared glass substrate 20, the colored layer 40 is formed on the second main surface 20B, and the transmittance adjustment layer 50 is formed on the colored layer 40. The transmittance adjustment layer 50 may be formed on the second main surface 20B, and the colored layer 40 may be formed on the transmittance adjustment layer 50.

(Example Using Film)

An example in which the colored layer 40 is formed using the film 70 is described. In this case, the colored layer 40 and the transmittance adjustment layer 50 are formed on one main surface side of the film 70. In this example, the colored layer 40 and the transmittance adjustment layer 50 are laminated in this order on one main surface of the film 70, but the transmittance adjustment layer 50 and the colored layer 40 may be laminated in this order. The method of forming each layer on one main surface of the film 70 may be any, and for example, the colored layer 40 may be formed on one main surface of the film 70 by screen printing, and the transmittance adjustment layer 50 may be formed on the colored layer 40 by screen printing.

Then, the adhesive layer 60 is provided on the other main surface of the film 70, and the adhesive layer 60 provided with the colored layer 40, the transmittance adjustment layer 50, and the film 70 adheres to the second main surface 20B of the glass substrate 20. Accordingly, the colored layer 40 and the transmittance adjustment layer 50 are formed on the second main surface 20B. In this case, for example, the adhesive layer 60 may adhere to the second main surface 20B by roll sticking under the atmospheric pressure or vacuum sticking using a vacuum sticking apparatus.

It is not essential to provide the adhesive layer 60. For example, one main surface of the film 70 on which the colored layer 40 and the transmittance adjustment layer 50 are provided may directly adhere to the second main surface 20B of the glass substrate 20.

(Example of Transfer Decoration)

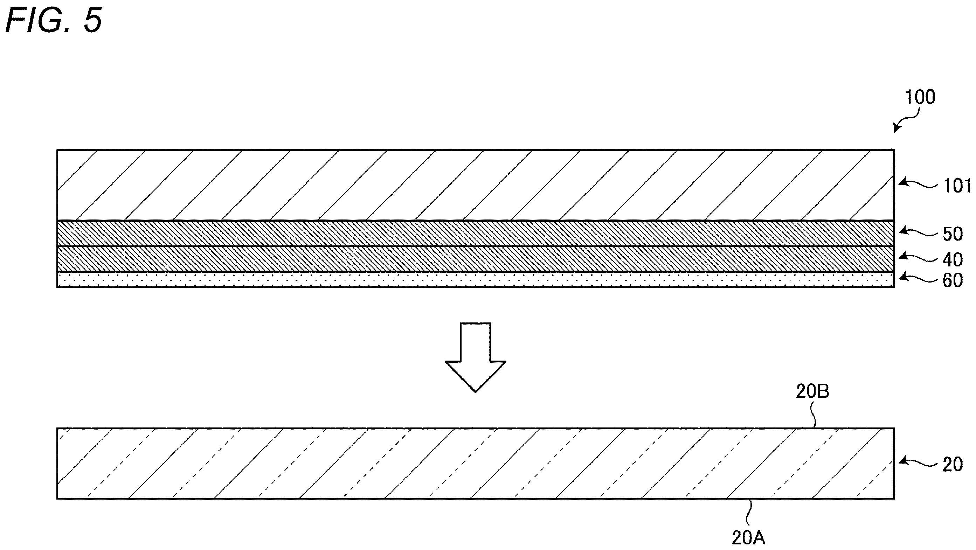

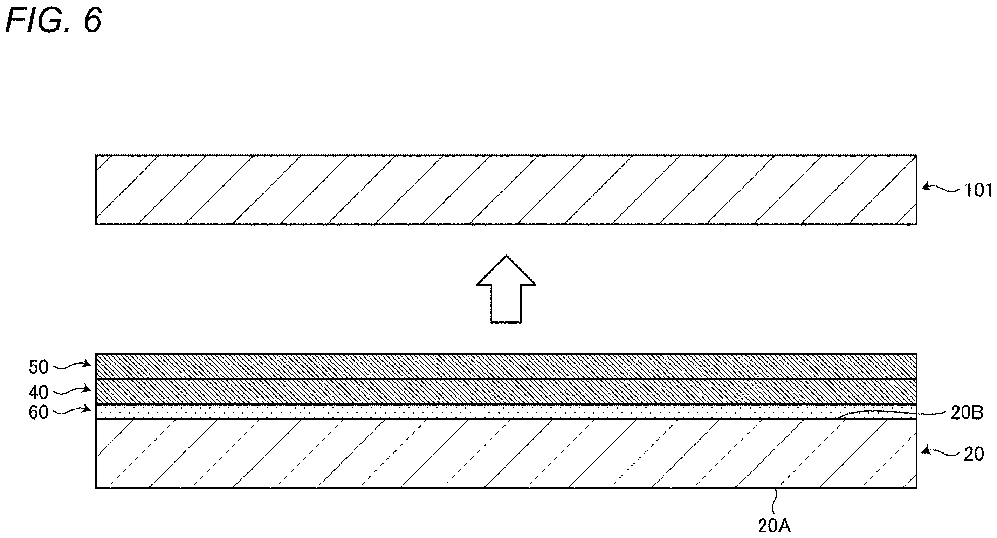

An example in which the colored layer 40 is formed by transfer decoration is described. FIG. 5 and FIG. 6 are schematic cross-sectional views showing a procedure of forming the colored layer by transfer decoration.

In the transfer decoration method, it is not necessary to provide the film 70. In the transfer decoration method, a transfer sheet 100 having the colored layer 40 and the transmittance adjustment layer 50 is brought into close contact with the glass substrate 20 under heating conditions to transfer the colored layer 40 and the transmittance adjustment layer 50 to the glass substrate 20. As shown in FIG. 5, the transfer sheet 100 is formed by laminating a transfer substrate (film) 101, the transmittance adjustment layer 50, the colored layer 40, and the adhesive layer 60 in this order. However, the lamination order is not limited thereto, and the transfer substrate 101, the colored layer 40, the transmittance adjustment layer 50, and the adhesive layer 60 may be laminated in this order.

The transfer substrate 101 is formed of a resin material or the like, and supports the transmittance adjustment layer 50, the colored layer 40, and the adhesive layer 60. The transfer substrate 101 may be formed to have a thickness of 20 $\mu$m or more and 100 $\mu$m or less. In the example in FIG. 5, a configuration in which the transfer sheet 100 includes the adhesive layer 60 in advance is described, but a configuration in which the transfer sheet 100 does not include the adhesive layer 60 also may be employed. In this case, for example, an ink having adhesiveness may be used as the colored layer 40 or the transmittance adjustment layer 50, or an adhesive may be additionally applied to the surface of the colored layer 40 or the transmittance adjustment layer 50.

Next, the transfer sheet 100 is laminated on the glass substrate 20 such that the second main surface 20B of the glass substrate 20 is in contact with the adhesive layer 60 of the transfer sheet 100.

Specifically, as shown in FIG. 5, the glass substrate 20 and the transfer sheet 100 are disposed such that the second main surface 20B of the glass substrate 20 faces the adhesive layer 60 of the transfer sheet 100. Next, the transfer sheet 100 (transfer substrate 101) is softened by heating the transfer sheet 100. As a heating method, for example, infrared rays, superheated steam, a hot plate, or the like can be used.

In this state, when a space between the glass substrate 20 and the transfer sheet 100 is depressurized to a substantially vacuum state, the softened transfer sheet 100 is shaped by a differential pressure and is brought into close contact with the second main surface 20B of the glass substrate 20. At this time, since the adhesive layer 60 of the transfer sheet 100 faces the second main surface 20B of the glass substrate 20, the transfer sheet 100 adheres to the second main surface 20B of the glass substrate 20 via the adhesive layer 60.

Finally, as shown in FIG. 6, the transfer substrate 101 of the transfer sheet 100 is peeled off from the glass substrate 20, whereby the transmittance adjustment layer 50, the colored layer 40, and the adhesive layer 60 remain on the second main surface 20B, and these layers can be transferred on the second main surface 20B.

<Properties of Glass Laminate>

Next, properties of the glass laminate 10 described above are described.

As a result of intensive studies, the present inventor has found that, when the glass laminate 10 has at least one of a first property to a fourth property described below, an image can be appropriately displayed while improving the designability. Hereinafter, the first property to the fourth property are described.

The glass laminate 10 according to the present embodiment preferably satisfies at least one of the first property to the fourth property, more preferably satisfies any two of the first property to the fourth property, still more preferably satisfies any three of the first property to the fourth property, and even more preferably satisfies all of the first property to the fourth property.

(First Property)

The first property defines a range of an average brightness $L_{ave}^*$ of the glass laminate 10. The average brightness $L_{ave}^*$ refers to an average value of the brightness $L^*$ on the entire main surface 10A of the glass laminate 10 when no image is displayed (when the display panel 3 is turned off).

More specifically, the average brightness $L_{ave}^*$ is measured as follows.

In the measurement, a light absorbing layer is provided on the main surface 10B of the glass laminate 10. As a method of providing the light absorbing layer, for example, a protective film of KUKKIRI MIERU (layer structure: protective film/pressure sensitive adhesive layer/black ink/PET) manufactured by TOMOEGAWA CORPORATION can be peeled off and attached. In the case of sticking the main surface 10B side of the glass laminate 10 to the display panel 3, the measurement may be performed in this state.

First, 20 measurement regions each having a diameter of 8 mm are selected from the main surface 10A of the glass laminate 10. The 20 measurement regions are preferably selected from the plane of the first main surface 10A without a deviation. In the selection, in the case where the colored layer 40 does not have a pattern, that is, in the case where the colored layer 40 has a uniform color, the measurement region may be randomly selected from the plane, and in the case where the colored layer 40 forms a pattern, that is, in the case where there is a difference in color tone depending on a position in the plane, it is preferable to visually select a place where the tendency of the pattern is different.

Next, a spectral colorimeter (for example, a spectral colorimeter CM-26d manufactured by Konica Minolta, Inc.) is used in each measurement region to measure a spectral reflectance at a measurement diameter of 8 mm in SCI mode in accordance with JISZ8722 (2009), and the color tone in an $L^*a^*b^*$ color system defined in JISZ8781 (2013) is calculated.

Among the obtained color tones, the average value of the brightness $L^*$ is defined as the average brightness $L_{ave}^*$. That is, the average value of the brightness $L^*$ in the 20 measurement regions is defined as the average brightness $L_{ave}^*$.

(First property: case of providing antireflection layer)

In the case where the glass laminate 10 is provided with an antireflection layer (in the case where the functional layer 30 includes an antireflection layer), the average brightness $L_{ave}^*$ defined as described above is preferably 22 or more and 43 or less, more preferably 26 or more and 40 or less, and still more preferably 29 or more and 37 or less. When the average brightness $L_{ave}^*$ is within this range, an image can be appropriately displayed while improving the designability.

Specifically, when the average brightness $L_{ave}^*$ is 22 or more, the reflected light from the colored layer 40 is sufficiently large, and the designability when no image is displayed can be appropriately improved. That is, for example, in both the region 10b overlapping the display surface 3A and the region 10a not overlapping the display surface 3A, the reflected light is sufficiently large, a boundary line between the region 10a and the region 10b is difficult to be visually recognized, and the designability can be improved. In addition, by sufficiently increasing the brightness of the interference light, the visibility of the color and the pattern desired to be visually recognized by the colored layer 40 can be improved.

When the average brightness $L_{ave}^*$ is 43 or less, it is possible to prevent the brightness of the interference light from the colored layer 40 from being excessively large and to appropriately display an image. That is, for example, even when an image is displayed, external light may be incident on the main surface 10A of the glass laminate 10 and the interference light from the colored layer 40 may be reflected. However, when the average brightness $L_{ave}^*$ is within the above range, it is possible to prevent the brightness of the interference light from being excessive large and to prevent the visibility of the image from being reduced due to the interference light. Further, in a dark portion of the image, since the intensity of the light from the display panel 3 is small, the color of the interference light is likely to be visually recognized, but when the average brightness $L_{ave}^*$ is within the above range, the dark portion of the image can be easily maintained in a dark color (color to be displayed), and the contrast of the image can be appropriately maintained.

The average brightness $L_{ave}^*$ can be set to a preferred range by adjusting at least one of the properties of the pearl pigment in the colored layer 40 and the properties of the transmittance adjustment layer 50.

(First property: case of not including antireflection layer)

In the case where the glass laminate 10 does not include an antireflection layer, the brightness measured as described above tends to be higher than in the case where the glass laminate 10 includes an antireflection layer.

In the case where the glass laminate 10 does not include an antireflection layer, the average brightness $L_{ave}^*$ is preferably 32 or more and 49 or less, more preferably 34 or more and 46 or less, and still more preferably 37 or more and 43 or less. When the average brightness $L_{ave}^*$ is within this range, an image can be appropriately displayed while improving the designability for the same reason as in the case where the antireflection layer is included.

(Second Property)

The second property defines a range of a color difference ΔE of the glass laminate 10. The color difference ΔE is a value shown in the following equation (1).

$$\Delta E = \{(\Delta a^*)^2 + (\Delta b^*)^2 + (\Delta L^*)^2\}^{0.5} \qquad (1)$$

Δa*, Δb*, and ΔL* shown in the equation (1) indicate differences in color tone (that is, a*, b*, and L*) between two measurement center points to be described later.

In the measurement, a light absorbing layer is provided on the main surface 10B of the glass laminate 10. As a method of providing the light absorbing layer, for example, a protective film of KUKKIRI MIERU (layer structure: protective film/pressure sensitive adhesive layer/black ink/PET) manufactured by TOMOEGAWA CORPORATION can be peeled off and attached. In the case of sticking a second main surface side of the glass laminate to the display panel, the measurement may be performed in this state.

First, five 10 mm² square measurement regions are selected from the main surface 10A of the glass laminate 10.

In the selection of the five measurement regions, in the case where the colored layer 40 forms a pattern, that is, in the case where there is a difference in color tone depending on a position in the plane, a region in which a change in color tone is felt to be large in a 10 mm² region by visual observation is selected.

Next, 10 vertical and 10 horizontal linear grid lines are set at an interval of 1 mm inside each 10 mm² square measurement region, and the color tone in the $L^*a^*b^*$ color system defined in JISZ8781 (2013) is measured at each of measurement center points (100 points in total) which are intersections of the grid lines.

More specifically, the grid lines are set as follows. Regarding the vertical grid lines, in two vertical sides among four sides forming an outer periphery of the measurement region, the first grid line parallel to the vertical side is set at a distance of 0.5 mm from one side, the second grid line parallel to the vertical side is set at a distance of 1 mm from the first grid line, and similarly, the third to tenth grid lines are set at an interval of 1 mm. In this manner, the tenth grid line is set at a distance of 0.5 mm from the other side. When the horizontal grid lines are similarly set, a total of 100 intersections of the vertical grid lines and the horizontal grid lines are formed in the measurement region. This intersection is used as a center point in the measurement using a spectral colorimeter to be described later.

At each measurement center point, a spectral colorimeter (for example, a spectral colorimeter CM-26d manufactured by Konica Minolta, Inc.) is used to measure a spectral reflectance at a measurement diameter of 3 mm in SCI mode in accordance with JISZ8722 (2009), and the color tone (that is, a*, b*, and L*) in the $L^*a^*b^*$ color system defined in JISZ8781 (2013) is calculated.

In each measurement region, the color difference ΔE, which is a difference in color tone between two measurement center points, is calculated for each combination of two measurement center points, and the maximum value of the difference in color tone (color difference ΔE) is determined as ΔE in the measurement region.

Then, the maximum ΔE among the ΔE calculated in the five measurement regions is adopted as $\Delta E_{max}$.

The color difference $\Delta E_{max}$ defined as described above is preferably 2 or more and 15 or less, more preferably 5 or more and 11 or less, and still more preferably 5 or more and 9 or less. When the color difference $\Delta E_{max}$ is within this range, an image can be appropriately displayed while improving the designability.

Specifically, when the color difference $\Delta E_{max}$ is 2 or more, the designability when no image is displayed can be appropriately improved. That is, for example, when the color difference $\Delta E_{max}$ is within the above range, the contrast at each position on the main surface 10A can be appropriately maintained, and for example, when it is desired to visually recognize a pattern having a different color depending on the position on the main surface 10A, the visibility of the pattern can be improved.

When the color difference $\Delta E_{max}$ is 15 or less, an image can be appropriately displayed. That is, for example, even when an image is displayed, external light may be incident on the main surface 10A of the glass laminate 10 and the interference light from the colored layer 40 may be reflected to visually recognize a pattern. When the color difference $\Delta E_{max}$ increases, the presence of the pattern is likely to be recognized when an image is displayed. However, when the color difference $\Delta E_{max}$ is within the above range, it is possible to prevent the visibility of the pattern from being excessive high and to prevent the visibility of the image from reducing.

The color difference $\Delta E_{max}$ can be set to a preferred range by adjusting at least one of the properties of the pearl pigment in the colored layer 40 and the properties of the transmittance adjustment layer 50.

(Third Property)

The third property defines a range of a DOI of the glass laminate 10. The DOI is an index indicating clarity of an image. The "clarity of an image" here is defined by the method A in ASTM procedure D5767 (ASTM 5767) named "Standard Test Methods for Instrumental Measurements of Distinctness-of-Image Gloss of Coating Surfaces". In calculating the DOI, a reflectance coefficient of the glass laminate 10 is measured on the main surface 10A at a specular reflection viewing angle and at an angle slightly away from the specular reflection viewing angle according to the method A in ASTM 5767, and these measured values are combined to obtain the DOI. More specifically, the DOI is represented by the following equation (2).

$$\text{DOI} = (1 - R_{os}/R_s) \times 100 \qquad (2)$$

In the equation (2), $R_{os}$ is an average value of relative reflection intensities in a range of 0.2° to 0.4° from a specular reflection direction, and $R_s$ is an average value of relative reflection intensities in the specular reflection direction (+0.05° to -0.05° around the specular reflection direction). For example, in the case where an input light source angle is +20° from the normal line on the surface of a sample and the surface perpendicular to the sample is regarded as 0°, $R_s$ is an average value of relative reflection intensities in a range of about -19.95° to -20.05°, and $R_{os}$ is an average value of relative reflection intensities in a range of about -20.2° to -20.4° (or -19.6° to -19.8° or an average of both of these two ranges).

In the case where the third property is satisfied, the glass laminate 10 preferably includes an antiglare layer in the functional layer 30, and the DOI measured on the main surface 10A of the glass laminate 10 is preferably 95 or less, more preferably 15 or more and 95 or less, and still more preferably 15 or more and 90 or less. When the DOI is within this range, it is possible to appropriately display an image while reducing the visibility of a glitter of the pearl pigment in the colored layer 40.

Here, the DOI measured on the main surface 10A of the glass laminate 10 having no antiglare layer is approximately 96 to 100, and the DOI can be 95 or less by appropriately providing the antiglare layer.

When the DOI is 95 or less, and more preferably 90 or less, the designability when no image is displayed can be appropriately improved. That is, for example, when the colored layer 40 contains a pearl pigment, a degree of brightness (glitter) of the reflected light (interference light) from the colored layer 40 may increase when no image is displayed, and the desired design may not be visually recognized by the viewer. That is, for example, in the case where uniform brown is desired to be visually recognized, pearl pigments of three primary colors of red, green, and blue are used in the colored layer 40, but in this case, the three primary colors may be visually recognized instead of brown. With respect to this, when the antiglare layer is provided and the DOI is within the above range, the visibility of the glitter can be reduced and the designability can be appropriately improved.

When the DOI is 95 or less, the visibility of the glitter can be reduced and an image can be appropriately displayed.

That is, for example, even when an image is displayed, external light may be incident on the main surface 10A of the glass laminate 10 and the interference light from the colored layer 40 may be reflected. However, when the DOI is within the above range, the visibility of the glitter can be reduced, and the visibility of the image can be prevented from being reduced due to the interference light.

On the other hand, it is preferable to adjust a degree of surface unevenness of the antiglare layer such that the DOI is 15 or more, thereby preventing deterioration of a touch feeling when the glass laminate is used as a touch panel.

The DOI can be set in a preferred range by adjusting at least one of the properties of the pearl pigment in the colored layer 40, the properties of the transmittance adjustment layer 50, the properties of the antiglare layer (such as the material and the thickness of the antiglare layer), and the properties of the antireflection layer (such as the material and the thickness of the antireflection layer).

(Fourth Property)

The fourth property defines a transmittance relationship between the region 10a (a region not overlapping the display panel 3) and the region 10b (a region overlapping the display panel 3) in the main surface 10A of the glass laminate 10. Here, the transmittance with respect to light having a wavelength of 550 nm in the region 10a is defined as a transmittance Ta, and the transmittance with respect to light having a wavelength of 550 nm in the region 10b is defined as a transmittance Tb. The transmittance is measured according to JIS Z 8701 (1999). As a transmittance meter, for example, a planar substrate transmittance measuring unit LV-RTM manufactured by Lambda Vision Inc. can be used.

In this case, the transmittance Tb (transmittance of the region overlapping the display panel 3) is preferably lower than the transmittance Ta (transmittance of the region not overlapping the display panel 3). A ratio (Tb/Ta) of the transmittance Tb to the transmittance Ta is preferably 30% or more and 100% or less, more preferably 60% or more and 100% or less, and still more preferably 60% or more and 90% or less. When a relationship between the transmittance Ta and the transmittance Tb is as described above, an image can be appropriately displayed while improving the designability.

Specifically, when the transmittance Tb is lower than the transmittance Ta, the designability when no image is displayed can be appropriately improved. That is, for example, when no image is displayed, the display surface 3A may be slightly brighter than other portions (for example, portions of the wall portion 12B) due to a polarizing plate provided in the display panel 3. With respect to this, when the transmittance Tb of the region 10b is lowered, the brightness of the region 10b is brought close to that of the region 10a, the boundary line between the region 10a and the region 10b is less likely to be visually recognized, and the designability can be improved.

Even when the transmittance Tb of the region 10b overlapping the display surface 3A is lower than the transmittance Ta, by using the pearl pigment in the colored layer 40, it is possible to transmit light with good color reproducibility, and since the contrast ratio of an image is not lowered, it is possible to appropriately display the image.

(Transmittance)

A transmittance of the glass laminate 10 with respect to light having a wavelength of 550 nm is preferably 10% or more and 70% or less, more preferably 10% or more and 60% or less, and still more preferably 20% or more and 60% or less. When the transmittance is within this range, an image can be appropriately displayed. The transmittance here refers to the transmittance of the entire main surface 10A of the glass laminate 10, in other words, the transmittance of the entire main surface 10A is within the above range. The transmittance is measured according to JIS Z 8701 (1999). As a transmittance meter, for example, a planar substrate transmittance measuring unit LV-RTM manufactured by Lambda Vision Inc. can be used.

The transmittance Ta of the region 10a (transmittance of the region not overlapping the display panel 3) is preferably 20% or more and 80% or less, more preferably 30% or more and 70% or less, and still more preferably 30% or more and 70% or less. When the transmittance Ta is within this range, it is possible to prevent the wall portion 12B under the region 10a from being visually recognized, and to appropriately display an image while improving the designability.

The transmittance Tb of the region 10b (transmittance of the region overlapping the display panel 3) is preferably 10% or more and 70% or less, more preferably 10% or more and 60% or less, and still more preferably 20% or more and 60% or less. When the transmittance Tb is within this range, an image can be appropriately displayed.

The transmittance Ta and the transmittance Tb can be set in a preferred range by adjusting at least one of the properties of the pearl pigment in the colored layer 40, the properties of the transmittance adjustment layer 50, and the properties of the antireflection layer (such as the material and the thickness of the antireflection layer).

(Effects)

As described above, a glass laminate 10 according to a first aspect of the present disclosure includes: a glass substrate 20 having a first main surface 20A and a second main surface 20B; a colored layer 40 containing a pearl pigment and provided on a second main surface 20B side of the glass substrate 20; a transmittance adjustment layer 50 provided on the second main surface 20B side of the glass substrate 20; and an antireflection layer provided on a first main surface 20A side, in which the glass laminate 10 has an average brightness $L_{ave}^*$, which is an average value of brightness $L^*$ in an $L^*a^*b^*$ color system measured on a first main surface 10A, of 22 or more and 43 or less. According to the present disclosure, an image can be appropriately displayed while improving the designability. In addition, when the glass substrate 20 is disposed on the main surface 10A side (direction Z2 side) with respect to the colored layer 40 and the transmittance adjustment layer 50, scratch resistance of the glass laminate 10 can be improved.

A glass laminate 10 according to a second aspect of the present disclosure includes: a glass substrate 20 having a first main surface 20A and a second main surface 20B; a colored layer 40 containing a pearl pigment and provided on a second main surface 20B side of the glass substrate 20; and a transmittance adjustment layer 50 provided on the second main surface 20B side of the glass substrate 20, in which the glass laminate 10 does not include an antireflection layer, and has an average brightness $L_{ave}^*$, which is an average value of brightness $L^*$ in an $L^*a^*b^*$ color system measured on a first main surface 10A, of 32 or more and 49 or less. According to the present disclosure, an image can be appropriately displayed while improving the designability.

A glass laminate 10 according to a third aspect of the present disclosure is the glass laminate 10 according to the first aspect or the second aspect, in which in a case where a color difference ΔE measured on the first main surface 10A is represented by an equation (1), a color difference $ΔE_{max}$, which is a maximum value of the color difference ΔE, is preferably 2 or more and 15 or less. $Δa^*$, $Δb^*$, and $ΔL^*$ are differences in values of a*, b*, and $L^*$ between two points, respectively.

According to the present disclosure, an image can be appropriately displayed while improving the designability.

A glass laminate 10 according to a fourth aspect of the present disclosure is the glass laminate 10 according to any one of the first aspect to the third aspect, and further preferably includes an antiglare layer provided on the first main surface 20A side of the glass substrate 20, in which a DOI on the main surface 10A of the glass laminate 10 on a side where the antiglare layer is provided is preferably 95 or less. According to the present disclosure, an image can be appropriately displayed while improving the designability.

A glass laminate 10 according to a fifth aspect of the present disclosure is the glass laminate 10 according to any one of the first aspect to the fourth aspect, in which a display panel 3 is provided on the second main surface 20B side (main surface 10B side) of the glass laminate 10, and a transmittance Tb with respect to light having a wavelength of 550 nm in a region 10b overlapping the display panel 3 in the entire main surface 10A of the glass laminate 10 is preferably lower than a transmittance Ta with respect to light having a wavelength of 550 nm in a region 10a not overlapping the display panel 3 in the entire main surface 10A of the glass laminate 10. According to the present disclosure, an image can be appropriately displayed while improving the designability.

A glass laminate 10 according to a sixth aspect of the present disclosure is the glass laminate 10 according to any one of the first aspect to the fifth aspect, and further preferably includes an adhesive layer 60 provided between the second main surface 20B of the glass substrate 20 and the layer of the colored layer 40 and the transmittance adjustment layer 50 that is on a glass substrate 20 side. The adhesive layer 60 preferably contains a cured resin, which is a cured product of a curable resin and a curing agent, and the adhesive layer 60 preferably further contains at least one selected from the group consisting of methyl ethyl ketoxime, diethyl malonate, epsilon-caprolactam, 3,5-dimethylpyrazole, and acetoxime. According to the present disclosure, since a transfer decoration method can be appropriately used by using such a material, the colored layer 40 and the transmittance adjustment layer 50 can appropriately adhere to the glass substrate 20.

A glass laminate 10 according to a seventh aspect of the present disclosure is the glass laminate 10 according to any one of the first aspect to the fifth aspect, and further preferably includes a pressure sensitive adhesive layer provided between the second main surface 20B of the glass substrate 20 and the layer of the colored layer 40 and the transmittance adjustment layer 50 on a glass substrate 20 side. The pressure sensitive adhesive layer preferably contains an acrylic resin or a silicone-based resin. According to the present disclosure, by using such a material, the pressure sensitive adhesiveness and the reliability can be improved, and the colored layer 40 and the transmittance adjustment layer 50 can appropriately pressure-sensitively adhere to the glass substrate 20.

A glass laminate 10 according to an eighth aspect of the present disclosure is the glass laminate 10 according to any one of the first aspect to the seventh aspect, in which the pearl pigment preferably includes a core member transparent to visible light and a film member covering the core member and made of a metal oxide having a higher refractive index to visible light than the core member. When such a pearl pigment is used, an image can be appropriately displayed while improving the designability.

A glass laminate 10 according to a ninth aspect of the present disclosure is the glass laminate 10 according to the eighth aspect, in which the core member preferably contains at least one selected from the group consisting of natural mica, synthetic mica, silica, alumina, a glass, and a polysilicate, and the film member preferably contains at least one selected from the group consisting of titanium oxide, zirconium oxide, zinc oxide, iron oxide, and tin oxide. When such a pearl pigment is used, an image can be appropriately displayed while improving the designability.

A glass laminate 10 according to a tenth aspect of the present disclosure is the glass laminate 10 according to any one of the first aspect to the ninth aspect, in which the transmittance adjustment layer 50 preferably does not contain a pearl pigment. When such a transmittance adjustment layer 50 is used, an image can be appropriately displayed while improving the designability.

A glass laminate 10 according to an eleventh aspect of the present disclosure is the glass laminate 10 according to any one of the first aspect to the tenth aspect, in which a transmittance with respect to light having a wavelength of 550 nm is preferably 10% or more and 70% or less. When the transmittance is within this range, an image can be appropriately displayed.

A glass laminate 10 according to a twelfth aspect of the present disclosure is the glass laminate 10 according to any one of the first aspect to the eleventh aspect, in which the glass substrate 20 is preferably curved. According to the present disclosure, even with a curved shape, an image can be appropriately displayed while improving the designability.

A glass laminate 10 according to a thirteenth aspect of the present disclosure is the glass laminate 10 according to any one of the first aspect to the twelfth aspect, in which the glass substrate 20 is preferably a chemically strengthened glass. According to the present disclosure, the scratch resistance of the glass laminate 10 can be improved.

A display device 2 according to a fourteenth aspect of the present disclosure preferably includes the glass laminate 10 according to any one of the first aspect to the thirteenth aspect, and a display panel 3 provided on the second main surface 20B side (direction Z1 side) of the glass laminate 10. According to the present disclosure, an image can be appropriately displayed while improving the designability.

A display device 2 according to a fifteenth aspect of the present disclosure is the display device 2 according to the fourteenth aspect, in which a transmittance Tb with respect to light having a wavelength of 550 nm in a region 10b overlapping the display panel 3 in the entire main surface 10A of the glass laminate 10 is preferably lower than a transmittance Ta with respect to light having a wavelength of 550 nm in a region 10a not overlapping the display panel 3 in the entire main surface 10A of the glass laminate 10. According to the present disclosure, an image can be appropriately displayed while improving the designability.

A method for producing a glass laminate 10 according to a sixteenth aspect of the present disclosure includes: preparing a glass substrate 20 having a first main surface 20A and a second main surface 20B; preparing a film 70 provided with a colored layer 40 containing a pearl pigment and a transmittance adjustment layer 50; placing the film 70 on a second main surface 20B side of the glass substrate 20; and providing an antireflection layer on a first main surface 20A side of the glass substrate 20, in which an average brightness $L_{ave}^{*}$, which is an average value of brightness measured on a main surface 10A, is 22 or more and 43 or less. According to the present disclosure, it is possible to produce the glass laminate 10 capable of appropriately displaying an image while improving the designability.

A method for producing a glass laminate 10 according to a seventeenth aspect of the present disclosure includes: preparing a glass substrate 20 having a first main surface 20A and a second main surface 20B; preparing a film 70 provided with a colored layer 40 containing a pearl pigment and a transmittance adjustment layer 50; and placing the film 70 on a second main surface 20B side of the glass substrate 20, in which no antireflection layer is formed on a first main surface 20A side of the glass substrate 20, and an average brightness $L_{ave}^{*}$, which is an average value of brightness measured on a main surface 10A, is 32 or more and 49 or less. According to the present disclosure, it is possible to produce the glass laminate 10 capable of appropriately displaying an image while improving the designability.

A method for producing the glass laminate 10 according to an eighteenth aspect of the present disclosure includes: preparing a glass substrate 20 having a first main surface 20A and a second main surface 20B; preparing a transfer sheet 100 in which a colored layer 40 containing a pearl pigment and a transmittance adjustment layer 50 are provided on a transfer substrate 101; forming the colored layer 40 containing a pearl pigment and the transmittance adjustment layer 50 on a second main surface 20B side of the glass substrate 20 by placing and transferring the transfer sheet 100 on a second main surface 20B of the glass substrate 20; and providing an antireflection layer on a first main surface 20A side of the glass substrate 20, in which an average brightness $L_{ave}^{*}$, which is an average value of brightness measured on a main surface 10A, is 22 or more and 43 or less. According to the present disclosure, it is possible to produce the glass laminate 10 capable of appropriately displaying an image while improving the designability.

A method for producing a glass laminate 10 according to a nineteenth aspect of the present disclosure includes: preparing a glass substrate 20 having a first main surface 20A and a second main surface 20B; preparing a transfer sheet 100 in which a colored layer 40 containing a pearl pigment and a transmittance adjustment layer 50 are provided on a transfer substrate 101; and forming the colored layer 40 containing a pearl pigment and the transmittance adjustment layer 50 on a second main surface 20B side of the glass substrate 20 by placing and transferring the transfer sheet 100 on the second main surface 20B of the glass substrate 20, in which no antireflection layer is formed on a first main surface 20A side of the glass substrate 20, and an average brightness $L_{ave}^{*}$, which is an average value of brightness measured on a main surface 10A, is 32 or more and 49 or less. According to the present disclosure, it is possible to produce the glass laminate 10 capable of appropriately displaying an image while improving the designability.

(Examples)

Next, Examples are described. The embodiments may be modified as long as the effects of the invention are exhibited.

(First Property Evaluation)

(Including Antireflection Layer)

(Example 1)

Table 1 is a table showing each example in the first property evaluation. In Example 1, a flat plate-shaped (glass shape: flat) glass substrate (Dragontrail manufactured by AGC Inc.) having a length of 100 mm, a width of 100 mm, and a thickness of 1.1 mm was prepared. Then, an antiglare layer (AG) was formed on the first main surface of the glass substrate by providing unevenness by etching, and an antireflection layer (AR) in which four layers of niobium oxide and silicon oxide were alternately laminated and an antifouling layer (AFP) made of a fluorine-containing organosilicon compound were formed in this order on the first main surface of the glass substrate by vapor deposition and sputtering. Subsequently, a colored layer was formed on the second main surface of a film substrate by a screen printing method, and a transmittance adjustment layer was formed thereon by a screen printing method to obtain a film laminate. A glass laminate was obtained by roll sticking the second main surface of the glass substrate and the first main surface of the film laminate under the atmospheric pressure using a pressure sensitive adhesive layer. At this time, the transmittance of the glass laminate was 50%. The transmittance was measured by the method described in the above embodiment.

The pressure sensitive adhesive layer was a compression-bonding type optically-clear pressure sensitive adhesive sheet (OCA) containing an acrylic resin, the film was made of a polyethylene terephthalate (PET), the colored layer was made of a GIZ-HF ink manufactured by Teikoku Printing Inks Mfg. Co., Ltd., and the transmittance adjustment layer was made of HQS manufactured by Seiko Advance Ltd.

In Example 1, a uniform colored layer was formed over the entire region, and no pattern was formed.

(Examples 2 to 10)

In Examples 2 to 10, each glass laminate was obtained in the same manner as in Example 1 except that a colored layer containing a pearl pigment was used. As the colored layer in Examples 2 to 10, an EG-RIG ink manufactured by Teikoku Printing Inks Mfg. Co., Ltd. was used. In Examples 2 to 5, the colored layer was uniformly formed over the entire region and no pattern was formed, and in Examples 6 to 10, the pattern (wood grain pattern) was formed in the colored layer. The pattern in each example was changed by adjusting the design of the pattern, the number of laminated colored layers, the type of the pearl pigment, the ratio of the pearl pigment to the resin component in the colored layer, and the like, and the transmittance of the glass laminate was changed according to the color tone and the thickness of the transmittance adjustment layer together with the colored layer.

The average brightness $L_{ave}^*$ of the glass laminates in Examples 2 to 10 was measured using the method described in the present embodiment. The measurement results are shown in Table 1A.

[Table 1A]

| | | | Example 1 | Example 2 | Example 3 | Example 4 | Example 5 |
|---|---|---|---|---|---|---|---|
| Condition | Layer configuration | First main surface side ↑ | AFP | AFP | AFP | AFP | AFP |
| | | | AR | AR | AR | AR | AR |
| | | | AG | AG | AG | AG | AG |
| | | | Glass | Glass | Glass | Glass | Glass |
| | | | Pressure sensitive adhesive layer | Pressure sensitive adhesive layer | Pressure sensitive adhesive layer | Pressure sensitive adhesive layer | Pressure sensitive adhesive layer |
| | | | Film | Film | Film | Film | Film |
| | | | Colored layer | Colored layer | Colored layer | Colored layer | Colored layer |
| | | Second main surface side ↓ | Adjustment layer | Adjustment layer | Adjustment layer | Adjustment layer | Adjustment layer |
| | Layer property | Pattern of colored layer | Plain color | | | | |
| | | Pigment in colored layer | Coloring pigment | Pearl | | | |
| | | Type of adjustment layer | Black (smoke ink) | | | | |
| | | Transmittance (%) | 50 | 50 | 50 | 50 | 50 |
| | | Average brightness $L_{ave}{}^{*}$ | - | 21 | 23 | 38 | 44 |
| Evaluation | During non-display | Color arrangement visibility | Good | Poor | Good | | |
| | | Bezel boundary | Good A | Visible C | Hard to see B | | |
| | During display | Clarity | Very poor | Very good | | | Poor |

(Table 1A continued)

| | | | Example 6 | Example 7 | Example 8 | Example 9 | Example 10 |
|---|---|---|---|---|---|---|---|
| Condition | Layer config-uration | First main sur-face side ↑ | AFP | AFP | AFP | AFP | AFP |
| | | | AR | AR | AR | AR | AR |
| | | | AG | AG | AG | AG | AG |
| | | | Glass | Glass | Glass | Glass | Glass |
| | | | Pressure sensitive adhesive layer | Pressure sensitive adhesive layer | Pressure sensitive adhesive layer | Pressure sensitive adhesive layer | Pressure sensitive adhesive layer |
| | | | Film | Film | Film | Film | Film |
| | | | Colored layer | Colored layer | Colored layer | Colored layer | Colored layer |
| | | Second main surface side ↓ | Adjustment layer | Adjustment layer | Adjustment layer | Adjustment layer | Adjustment layer |
| | Layer prop-erty | Pattern of co-lored layer | Pattern 1 | Pattern 2 | Pattern 3 | Pattern 4 | Pattern 5 |
| | | Pigment in colored layer | Pearl | | | | |
| | | Type of adjustment layer | Black (smoke ink) | | | | |
| | | Transmittance (%) | 50 | 50 | 50 | 30 | 30 |
| | | Average brightness $L_{ave}^{*}$ | 21 | 23 | 30 | 38 | 44 |
| Evaluation | During non-display | Color arrangement visibility | Poor | Good | | | |
| | | Bezel boundary | Visible C | Hard to see B | | | |
| | During display | Clarity | Very good | | | | Poor |

(Evaluation)

As an evaluation when no image was displayed, color arrangement visibility and visibility at a bezel boundary were evaluated. As an evaluation when an image was displayed, clarity was evaluated.

The color arrangement visibility refers to the visibility of a pattern desired to be visually recognized by the colored layer. A case where the color of the colored layer can be visually recognized is evaluated as good, and a case where the color of the colored layer cannot be visually recognized is evaluated as poor.

The visibility at the bezel boundary refers to the visibility of the boundary line between the region 10a and the region 10b. A case where the boundary cannot be visually recognized is evaluated as A, a case where the boundary is hardly visually recognized is evaluated as B, and a case where the boundary can be visually recognized is evaluated as C.

The clarity refers to the visibility of an image. A case where the color of the colored layer is not reflected in the image and can be clearly visually recognized is evaluated as good, a case where the color of the colored layer can be visually recognized more than good is evaluated as very good, a case where the color of the colored layer is reflected in the image and cannot be clearly visually recognized is evaluated as poor, and a case where the visibility is inferior to poor is evaluated as very poor.

As shown in Table 1A, in Examples 3 to 4 and Examples 7 to 9 in which the average brightness $L_{ave}^{*}$ is 22 or more and 43 or less, all evaluations of the color arrangement visibility, the visibility at the bezel boundary, and the clarity are good, and it can be seen that the image can be appropriately displayed while improving the designability.

(No Antireflection Layer)

(Examples 11 to 16)

In Example 11, a glass laminate was obtained in the same manner as in Example 1 except that an antiglare layer (AG) and an antireflection layer (AR) were not provided. In Examples 12 to 16, each glass laminate was obtained by the same method as in Example 2 except that an antiglare layer (AG) and an antireflection layer (AR) were not provided and the properties of the colored layer 40 were changed to those shown in Table 1B.

The average brightness $L_{ave}^*$ of the glass laminates in Examples 11 to 16 was measured using the method described in the present embodiment. The measurement results are shown in Table 1B.

EP 4 742 220 A1

[Table 1B]

| Condition | | | Example 11 | Example 12 | Example 13 | Example 14 | Example 15 | Example 16 |
|---|---|---|---|---|---|---|---|---|
| Condition | Layer configuration | First main surface side ↑ | AFP | AFP | AFP | AFP | AFP | AFP |
| | | | - | - | - | - | - | - |
| | | | - | - | - | - | - | - |
| | | | Glass | Glass | Glass | Glass | Glass | Glass |
| | | | Pressure sensitive adhesive layer | Pressure sensitive adhesive layer | Pressure sensitive adhesive layer | Pressure sensitive adhesive layer | Pressure sensitive adhesive layer | Pressure sensitive adhesive layer |
| | | | Film | Film | Film | Film | Film | Film |
| | | | Colored layer | Colored layer | Colored layer | Colored layer | Colored layer | Colored layer |
| | | Second main surface side ↓ | Adjustment layer | Adjustment layer | Adjustment layer | Adjustment layer | Adjustment layer | Adjustment layer |
| | Layer property | Pattern of colored layer | Plain color | Pattern 1 | Pattern 2 | Pattern 6 | Pattern 4 | Pattern 5 |
| | | Pigment in colored layer | Coloring pigment | Pearl | | | | |
| | | Type of adjustment layer | Black (smoke ink) | | | | | |
| | | Transmittance (%) | 50 | 50 | 50 | 50 | 30 | 30 |
| | | Average brightness $L_{ave}^*$ | - | 30 | 33 | 38 | 44 | 51 |
| Evaluation | During non-display | Color arrangement visibility | Good | Poor | Good | | | |
| | | Bezel boundary | Good A | Visible C | Hard to see B | | | |
| | During display | Clarity | Very poor | Very good | | | | Poor |

(Evaluation)

As shown in Table 1B, in Examples 13 to 15 in which the average brightness $L_{ave}^*$ is 32 or more and 49 or less, all evaluations of the color arrangement visibility, the visibility at the bezel boundary, and the clarity are good, and it can be seen that the image can be appropriately displayed while improving the designability.

(Reference Example)

As a reference example, a glass laminate in which an adhesive layer, a film, a colored layer, and a transmittance adjustment layer were disposed on the first main surface side of a glass substrate was prepared. It is found that in this glass laminate, the hardness of the first main surface is lower than that of the glass laminate in each example, and the scratch resistance cannot be improved.

(Second Property Evaluation)

Table 2 is a table showing each example in the second property evaluation.

EP 4 742 220 A1

[Table 2]

| Condition | Layer config-uration | First main sur-face side ↑ | Example 17 | Example 18 | Example 19 | Example 20 | Example 21 | Example 22 |
|---|---|---|---|---|---|---|---|---|
| | | | AFP | AFP | AFP | AFP | AFP | - |
| | | | AR | AR | AR | AR | AR | - |
| | | | AG | AG | AG | AG | AG | AG |
| | | | Glass | Glass | Glass | Glass | Glass | Glass |
| | | | Pressure sensitive adhesive layer | Pressure sensitive adhesive layer | Pressure sensitive adhesive layer | Pressure sensitive adhesive layer | Pressure sensitive adhesive layer | Pressure sensitive adhesive layer |
| | | | Film | Film | Film | Film | Film | Film |
| | | | Colored layer | Colored layer | Colored layer | Colored layer | Colored layer | Colored layer |
| | | Second main surface side ↓ | Adjustment layer | Adjustment layer | Adjustment layer | Adjustment layer | Adjustment layer | Adjustment layer |
| | Layer prop-erty | Pattern of co-lored layer | Pattern 7 | Pattern 4 | Pattern 3 | Pattern 6 | Pattern 2 | Pattern 8 |
| | | Pigment in colored layer | Pearl | | | | | |
| | | Type of adjustment layer | Black (smoke ink) | | | | | |
| | | Transmittance (%) | 60 | 60 | 50 | 50 | 50 | 50 |
| | | Average brightness $L_{ave}{}^*$ | 40 | 40 | 30 | 30 | 23 | 37 |
| | | Color differ-ence $\Delta E_{max}$ | 18 | 14.5 | 6.7 | 3.5 | 2.3 | 1.8 |
| Evaluation | During non-display | Pattern visibility | Very good | | | Good | | Poor |
| | During display | Clarity | Good | Very good | | | | |

(Examples 17 to 22)

In Examples 17 to 22, each glass laminate was prepared in the same manner as in Example 2 except that the colored layer was changed to those shown in Table 2.

The average brightness $L_{ave}^*$ and the color difference $\Delta E_{max}$ of the glass laminates in Examples 17 to 22 were measured using the methods described in the present embodiment. The measurement results are shown in Table 2.

(Evaluation)

As an evaluation when no image was displayed, pattern visibility was evaluated. As an evaluation when an image was displayed, clarity was evaluated.

The pattern visibility refers to the visibility of the pattern desired to be visually recognized by the colored layer. A case where the pattern can be visually recognized is evaluated as good, a case where the pattern cannot be visually recognized is evaluated as poor, and a case where the visibility is higher than good is evaluated as very good.

The clarity refers to the visibility of the image. A case where the color of the colored layer is not reflected in the image and the pattern can be clearly visually recognized without interfering with the displayed image is evaluated as good, a case where the color of the colored layer is reflected in the image or the pattern interferes with the displayed image and cannot be clearly visually recognized is evaluated as poor, and a case where the visibility is higher than good is evaluated as very good.

As shown in Table 2, in Examples 18 to 21 in which the color difference $\Delta E_{max}$ is 2 or more and 15 or less, the pattern visibility is very good or good, and the clarity is very good, and it can be seen that the image can be appropriately displayed while improving the designability.

(Third Property Evaluation)

Table 3 is a table showing each example in the third property evaluation.

[Table 3]

| | | | Example 23 | Example 24 | Example 25 | Example 26 |
|---|---|---|---|---|---|---|
| Condition | Layer configuration | First main surface side ↑ | AFP | AFP | AFP | AFP |
| | | | AR | AR | AR | AR |
| | | | - | AG | AG | AG |
| | | | Glass | Glass | Glass | Glass |
| | | | Pressure sensitive adhesive layer | Pressure sensitive adhesive layer | Pressure sensitive adhesive layer | Pressure sensitive adhesive layer |
| | | | Film | Film | Film | Film |
| | | | Colored layer | Colored layer | Colored layer | Colored layer |
| | | Second main surface side ↓ | Adjustment layer | Adjustment layer | Adjustment layer | Adjustment layer |
| | Layer property | Gross (%) | - | 130 | 80 | 38 |
| | | DOI | 98 | 96 | 92 | 85 |
| | | Pattern of colored layer | Pattern 4 | Pattern 4 | Pattern 4 | Pattern 2 |
| | | Pigment in colored layer | Pearl | | | |
| | | Type of adjustment layer | Black (smoke ink) | | | |
| | | Transmittance (%) | 60 | 60 | 60 | 30 |

(continued)

|  |  |  | Example 23 | Example 24 | Example 25 | Example 26 |
|---|---|---|---|---|---|---|
| Evaluation | During non-display | Glitter | Presence | | Absence | |
|  | During display | Clarity | Very good | | | |

(Table 3 continued)

|  |  |  | Example 27 | Example 28 | Example 29 | Example 30 |
|---|---|---|---|---|---|---|
| Condition | Layer configuration | First main surface side↑ | AFP | AFP | AFP | AFP |
|  |  |  | AR | AR | AR | AR |
|  |  |  | AG | AG | AG | AG |
|  |  |  | Glass | Glass | Glass | Glass |
|  |  |  | Pressure sensitive adhesive layer | Pressure sensitive adhesive layer | Pressure sensitive adhesive layer | Pressure sensitive adhesive layer |
|  |  |  | Film | Film | Film | Film |
|  |  |  | Colored layer | Colored layer | Colored layer | Colored layer |
|  |  | Second main surface side ↓ | Adjustment layer | Adjustment layer | Adjustment layer | Adjustment layer |
|  | Layer property | Gross (%) | 38 | 38 | 38 | 30 |
|  |  | DOI | 76 | 57 | 23 | 19 |
|  |  | Pattern of colored layer | Pattern 2 | Pattern 9 | Pattern 4 | Pattern 4 |
|  |  | Pigment in colored layer | Pearl | | | |
|  |  | Type of adjustment layer | Black (smoke ink) | | | |
|  |  | Transmittance (%) | 50 | 30 | 60 | 60 |
| Evaluation | During non-display | Glitter | Absence | | | |
|  | During display | Clarity | Very good | | | |

(Examples 23 to 30)

In Examples 23 to 30, each glass laminate was prepared by the same method as in Example 2 except that the colored layer was changed to those shown in Table 3, and an antiglare layer (AG) was provided by forming unevenness by etching to have a 60° mirror surface glossiness (gloss value) shown in Table 3.

The DOI of the glass laminates in Examples 23 to 30 was measured using the method described in the present embodiment. The measurement results are shown in Table 3.

(Evaluation)

As an evaluation when no image was displayed, glitter was evaluated. As an evaluation when an image was displayed, clarity was evaluated.

The glitter refers to not preferred reflected light that appears locally bright due to the pearl pigment. A case where the reflected light is visually recognized is evaluated as "present" and a case where the reflected light is not visually recognized is evaluated as "absent".

The clarity refers to the visibility of the image. A case where the color of the colored layer is not reflected in the image and can be clearly visually recognized is evaluated as good, a case where the color of the colored layer is reflected in the image and cannot be clearly visually recognized is evaluated as poor, and a case where the visibility is higher than good is evaluated as very good.

As shown in Table 3, in Examples 25 to 30 in which the DOI is 95 or less, all evaluations of the glitter and the clarity are good, and it can be seen that the image can be appropriately displayed while improving the designability.

(Fourth Property Evaluation)

Table 4 is a table showing each example in the fourth property evaluation.

[Table 4]

| | | | Example 31 | Example 32 | Example 33 |
|---|---|---|---|---|---|
| Condition | Layer config-uration | First main surface side ↑ | AFP | AFP | AFP |
| | | | AR | AR | AR |
| | | | AG | AG | AG |
| | | | Glass | Glass | Glass |
| | | | Pressure sensi-tive adhesive layer | Pressure sensi-tive adhesive layer | Pressure sensi-tive adhesive layer |
| | | | Film | Film | Film |
| | | | Colored layer | Colored layer | Colored layer |
| | | Second main surface side ↓ | Adjustment layer | Adjustment layer | Adjustment layer |
| | Layer property | Pattern of colored layer | Pattern 4 | | |
| | | Pigment in colored layer | Pearl | | |
| | | Type of adjustment layer | Black (smoke ink) | | |
| | | Transmittance Tb (display region) (%) | 30 | 30 | 30 |
| | | Transmittance Ta (non-display region) (%) | 20 | 30 | 40 |
| Evaluation | During non-display | Bezel boundary | Hard to see B | | Harder to see A |
| | During display | Clarity | Very good | | |

(Examples 31 to 33)

In Examples 31 to 33, each glass laminate was prepared in the same manner as in Example 2 except that the colored layer was changed to those shown in Table 4 and an antiglare layer (AG) was provided.

For the glass laminates in Examples 31 to 33, the transmittance Tb in the region 10b overlapping the display panel and the transmittance Ta in the region 10a not overlapping the display panel were measured using the method described in the present embodiment. The measurement results are shown in Table 4.

(Evaluation)

As an evaluation when no image was displayed, the bezel boundary was evaluated. As an evaluation when an image was displayed, clarity was evaluated.

The visibility at the bezel boundary refers to the visibility of the boundary line between the region 10a and the region 10b. A case where the boundary cannot be visually recognized is evaluated as A, a case where the boundary is hardly visually recognized is evaluated as B, and a case where the boundary can be visually recognized is evaluated as C.

The clarity refers to the visibility of the image. A case where the color of the colored layer is not reflected in the image and can be clearly visually recognized is evaluated as good, a case where the color of the colored layer is reflected in the image and cannot be clearly visually recognized is evaluated as poor, and a case where the visibility is higher than good is evaluated as very good.

As shown in Table 4, in Example 33 in which the transmittance Tb of the region 10b in which the image is displayed is lower than the transmittance Ta of the region 10a in which no image is displayed, all evaluations of the bezel boundary and the clarity are good, and it can be seen that the image can be appropriately displayed while improving the designability.

Although the embodiments of the present invention have been described above, the embodiments are not limited to the contents of these embodiments. In addition, the components described above should include those that can be easily conceived by a person skilled in the art, those that are substantially the same, and those within a so-called equivalent range. Further, the above components can be appropriately combined. Further, various omissions, substitutions, or modifications of the components can be made without departing from the gist of the embodiments described above.

The present application is based on a Japanese patent application (Japanese Patent Application No. 2023-112055) filed on July 7, 2023, the entire contents of which are incorporated herein by reference.

REFERENCE SIGNS LIST

2 display device
3 display panel
10 glass laminate
20 glass substrate
30 functional layer
40 colored layer
50 transmittance adjustment layer
60 adhesive layer

**Claims**

1. A glass laminate comprising:

   a glass substrate comprising a first main surface and a second main surface;
   a colored layer comprising a pearl pigment and provided on a second main surface side of the glass substrate;
   a transmittance adjustment layer provided on the second main surface side of the glass substrate; and
   an antireflection layer provided on a first main surface side of the glass substrate,
   wherein the glass laminate has an average brightness $L_{ave}^*$, which is an average value of brightness $L^*$ in an $L^*a^*b^*$ color system measured on the first main surface, of 22 or more and 43 or less.

2. A glass laminate comprising:

   a glass substrate comprising a first main surface and a second main surface;
   a colored layer comprising a pearl pigment and provided on a second main surface side of the glass substrate; and
   a transmittance adjustment layer provided on the second main surface side of the glass substrate,
   wherein the glass laminate does not comprise an antireflection layer, and
   the glass laminate has an average brightness $L_{ave}^*$, which is an average value of brightness $L^*$ in an $L^*a^*b^*$ color system measured on the first main surface, of 32 or more and 49 or less.

3. The glass laminate according to claim 1 or 2, wherein in a case where a color difference ΔE measured on the first main surface is represented by the following equation (1), a color difference $ΔE_{max}$, which is a maximum value of the color difference ΔE, is 2 or more and 15 or less,

$$\Delta E = \{(\Delta a^*)^2 + (\Delta b^*)^2 + (\Delta L^*)^2\}^{0.5} \qquad (1)$$

where $\Delta a^*$, $\Delta b^*$, and $\Delta L^*$ are differences in values of $a^*$, $b^*$, and $L^*$ between two points, respectively.

4. The glass laminate according to claim 1 or 2, further comprising an antiglare layer provided on the first main surface side of the glass substrate,
wherein a DOI on a main surface of the glass laminate on a side where the antiglare layer is provided is 95 or less.

5. The glass laminate according to claim 1 or 2,

wherein a display panel is provided on the second main surface side of the glass laminate, and
a transmittance with respect to light having a wavelength of 550 nm in a region overlapping the display panel in the entire main surface of the glass laminate is lower than a transmittance with respect to light having a wavelength of 550 nm in a region not overlapping the display panel in the entire main surface of the glass laminate.

6. The glass laminate according to claim 1 or 2, further comprising an adhesive layer provided between the second main surface of the glass substrate and the layer of the colored layer and the transmittance adjustment layer that is on a glass substrate side,

wherein the adhesive layer comprises a cured resin, which is a cured product of a curable resin and a curing agent, and
the adhesive layer further comprises at least one selected from the group consisting of methyl ethyl ketoxime, diethyl malonate, epsilon-caprolactam, 3,5-dimethylpyrazole, and acetoxime.

7. The glass laminate according to claim 1 or 2, further comprising a pressure sensitive adhesive layer provided between the second main surface of the glass substrate and the layer of the colored layer and the transmittance adjustment layer that is on a glass substrate side,
wherein the pressure sensitive adhesive layer comprises an acrylic resin or a silicone-based resin.

8. The glass laminate according to claim 1 or 2, wherein the pearl pigment comprises a core member transparent to visible light, and a film member covering the core member and made of a metal oxide having a higher refractive index to visible light than the core member.

9. The glass laminate according to claim 8,

wherein the core member comprises at least one selected from the group consisting of natural mica, synthetic mica, silica, alumina, a glass, and a polysilicate, and
the film member comprises at least one selected from the group consisting of titanium oxide, zirconium oxide, zinc oxide, iron oxide, and tin oxide.

10. The glass laminate according to claim 1 or 2, wherein the transmittance adjustment layer does not comprise the pearl pigment.

11. The glass laminate according to claim 1 or 2, wherein a transmittance with respect to light having a wavelength of 550 nm is 10% or more and 70% or less.

12. The glass laminate according to claim 1 or 2, wherein the glass substrate is curved.

13. The glass laminate according to claim 1 or 2, wherein the glass substrate is a chemically strengthened glass.

14. A display device comprising:

the glass laminate according to claim 1 or 2; and
a display panel provided on the second main surface side of the glass laminate.

**15.** The display device according to claim 14, wherein a transmittance with respect to light having a wavelength of 550 nm in a region overlapping the display panel in the entire main surface of the glass laminate is lower than a transmittance with respect to light having a wavelength of 550 nm in a region not overlapping the display panel in the entire main surface of the glass laminate.

**16.** A method for producing the glass laminate according to claim 1 or 2, the method comprising:

preparing a glass substrate having a first main surface and a second main surface;
preparing a film provided with a colored layer comprising a pearl pigment and a transmittance adjustment layer; and
placing the film on a second main surface side of the glass substrate.

**17.** A method for producing the glass laminate according to claim 1 or 2, the method comprising:

preparing a glass substrate having a first main surface and a second main surface;
preparing a transfer sheet in which a colored layer comprising a pearl pigment and a transmittance adjustment layer are provided on a transfer substrate; and
forming the colored layer comprising a pearl pigment and the transmittance adjustment layer on a second main surface side of the glass substrate by placing and transferring the transfer sheet on the second main surface of the glass substrate.

## FIG. 1

# FIG. 2

## FIG. 3A

WHEN NOT DISPLAYED

2

10A

⊗Z1(Z)  →X1(X) ↑Y1(Y)
⊙Z2(Z)  ←X2(X) ↓Y2(Y)

# FIG. 3B

WHEN DISPLAYED                                    2

~2A

---12B
(12Ba)

3(3A)          10b          10a

⊗ Z1(Z)  → X1(X)  ↑ Y1(Y)
⊙ Z2(Z)  ← X2(X)  ↓ Y2(Y)

*FIG. 4*

EP 4 742 220 A1

*FIG. 5*

EP 4 742 220 A1

*FIG. 6*

EP 4 742 220 A1

## INTERNATIONAL SEARCH REPORT

International application No.

**PCT/JP2024/023778**

### A. CLASSIFICATION OF SUBJECT MATTER

*G09F 9/00*(2006.01)i; *B32B 7/023*(2019.01)i; *B32B 17/06*(2006.01)i; *C03C 17/245*(2006.01)i; *C03C 17/42*(2006.01)i; *G09F 9/30*(2006.01)i
FI: G09F9/00 313; B32B7/023; B32B17/06; C03C17/245; C03C17/42; G09F9/00 338; G09F9/30 308A

According to International Patent Classification (IPC) or to both national classification and IPC

### B. FIELDS SEARCHED

Minimum documentation searched (classification system followed by classification symbols)

B32B1/00-43/00; B60K35/00-37/20; B60R9/00-11/06; G09F9/00-9/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2023-072971 A (NITTO DENKO CORPORATION) 25 May 2023 (2023-05-25) paragraphs [0011]-[0103], fig. 1-2 | 1-3, 7, 10-14, 16-17 |
| Y | paragraphs [0011]-[0103], fig. 1-2 | 4, 6, 8-9 |
| Y | JP 2005-329587 A (DENSO CORPORATION) 02 December 2005 (2005-12-02) paragraphs [0035]-[0037], fig. 3 | 4 |
| Y | WO 2017/014225 A1 (FUJIFILM CORPORATION) 26 January 2017 (2017-01-26) paragraphs [0166]-[0170] | 6 |
| Y | JP 2020-006575 A (KYODO PRINTING CO., LTD.) 16 January 2020 (2020-01-16) paragraphs [0038]-[0039] | 8-9 |
| A | JP 2013-205706 A (NIPPON SEIKI CO., LTD.) 07 October 2013 (2013-10-07) entire text, all drawings | 1-17 |

☑ Further documents are listed in the continuation of Box C.    ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **19 July 2024** | **30 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/023778**

### C.    DOCUMENTS CONSIDERED TO BE RELEVANT

| Category* | Citation of document, with indication, where appropriate, of the relevant passages | Relevant to claim No. |
|---|---|---|
| A | JP 2019-117223 A (DAI NIPPON PRINTING CO., LTD.) 18 July 2019 (2019-07-18)<br>entire text, all drawings | 1-17 |
| A | JP 2022-113654 A (SUMITOMO CHEMICAL COMPANY, LIMITED) 04 August 2022 (2022-08-04)<br>entire text, all drawings | 1-17 |
| A | US 2016/0372701 A1 (SAMSUNG DISPLAY CO., LTD.) 22 December 2016 (2016-12-22)<br>entire text, all drawings | 1-17 |

Form PCT/ISA/210 (second sheet) (July 2022)

## INTERNATIONAL SEARCH REPORT
### Information on patent family members

International application No.

**PCT/JP2024/023778**

| Patent document cited in search report | | | Publication date (day/month/year) | Patent family member(s) | | | Publication date (day/month/year) |
|---|---|---|---|---|---|---|---|
| JP | 2023-072971 | A | 25 May 2023 | WO | 2023-085319 | A1 | |
| | | | | paragraphs [0011]-[0103], fig. 1-2 | | | |
| | | | | TW | 202325538 | A | |
| JP | 2005-329587 | A | 02 December 2005 | (Family: none) | | | |
| WO | 2017/014225 | A1 | 26 January 2017 | US | 2018-0157111 | A1 | |
| | | | | paragraphs [0236]-[0242] | | | |
| | | | | KR | 10-2018-0019707 | A | |
| JP | 2020-006575 | A | 16 January 2020 | (Family: none) | | | |
| JP | 2013-205706 | A | 07 October 2013 | (Family: none) | | | |
| JP | 2019-117223 | A | 18 July 2019 | WO | 2019-044847 | A1 | |
| | | | | entire text, all drawings | | | |
| JP | 2022-113654 | A | 04 August 2022 | CN | 114791643 | A | |
| | | | | entire text, all drawings | | | |
| | | | | KR | 10-2022-0107954 | A | |
| US | 2016/0372701 | A1 | 22 December 2016 | CN | 106257680 | A | |
| | | | | entire text, all drawings | | | |
| | | | | KR | 10-2017-0000030 | A | |

Form PCT/ISA/210 (patent family annex) (July 2022)

## REFERENCES CITED IN THE DESCRIPTION

**Patent documents cited in the description**

- WO 2020040195 A
- JP 2023112055 A